# EUROPEAN PATENT SPECIFICATION

(11) **EP 3 506 718 B1**
(45) Date of publication and mention of the grant of the patent: **17.11.2021**
(21) Application number: 17842772.0
(22) Date of filing: 01.08.2017
(51) Int. Cl.: H04W 76/15

(54) **RADIO ACCESS NETWORK SLICE SELECTION METHODS AND APPARATUS**
VERFAHREN UND VORRICHTUNGEN ZUR AUSWAHL VON FUNKZUGRIFFSNETZWERK-SLICES
PROCÉDÉS ET APPAREILS DE SÉLECTION DE TRANCHES DE RÉSEAU D'ACCÈS RADIO

(30) Priority: 26.08.2016 CN 201610740859
(43) Date of publication of application: 03.07.2019
(73) Proprietor: ZTE Corporation, Shenzhen, Guangdong 518057 (CN)
(72) Inventor: YANG, Li, Shenzhen Guangdong 518057 (CN); LI, Dapeng, Shenzhen Guangdong 518057 (CN)
(74) Representative: Aipex B.V.
(86) International application number: PCT/CN2017/095495
(87) International publication number: WO 2018/036349

(56) References cited:
- CN-A- 103 067 245
- CN-A- 103 595 647
- CN-A- 104 105 219
- CN-A- 104 955 172
- CN-A- 105 791 355
- CN-A- 105 898 894
- US-A1- 2013 007 232

## Description

### TECHNICAL FIELD

The present application relates to, but is not limited to, wireless communications and, in particular, relates to radio access network slice selection methods and apparatus.

### BACKGROUND

In today's era of comprehensive informatization, the demand for service data transmission applications is growing explosively in various industries. Compared with traditional 3G and 4G mobile communication systems, a 5G system is facing application scenarios that are hugely different. A future 5G mobile network needs to provide not only services for communications between people, but also a wide range of services for a wide variety of Internet of Things devices. By use of a 5G mobile network, virtual reality, high-definition videos and other services with ultra-high data transmission rate requirements, or car networking unmanned driving, telemedicine surgery and other services with low-latency and ultra-reliable transmission service requirements, as well as the density of UEs in small Internet of Things are greatly improved in terms of transmission rates, single-user uplink and downlink rates, end-to-end delays, and the number of accessible UEs per square meter compared with those in a mobile network.

A traditional communication network for limited application scenarios uses a simple architecture of a single radio access network plus a core network function. This architecture has a fixed configuration that cannot meet the application requirements and performance requirements of all scenarios. If a dedicated network is built for each scenario to meet customized application requirements and performance requirements, a large amount of infrastructure or spectrum resources will be wasted. The development of the Network Function Virtualization (NFV) technology makes it possible for operators to build different virtual networks for different service needs. The network slicing technology of the core network and the radio access network is to perform logical function definition and division for the network on the basis of general physical infrastructure (including computing resources, storage resources, transmission resources, etc.) to form end-to-end virtual network slices. Each virtual network slice has different functional performance features to dynamically meet a variety of service needs and business models. By use of NFV, software can be decoupled from hardware, and network infrastructure equipment providers no longer need to provide dedicated and application-restricted hardware resources for different customer objects but can use NFV and Software Defined Network (SDN) technologies to introduce the concept of customer tenants and to allocate resources for different tenant groups on the same infrastructure to achieve resource isolation and use isolation among tenants. CN105898894A introduces about a method and device for controlling a Radio Resource Control (RRC) state according to the state of UE. CN103067245A introduces about a flow table spatial isolation device for network virtualization, and CN103595647 introduces about an OpenFlow-based downlink signaling processing method for an SDN virtualization platform.

Network slicing divides one physical network into multiple virtual logical networks. Each virtual network corresponds to different application scenarios. That is, one physical network is cut into multiple virtual end-to-end networks, each of which includes network devices, access, transmission and core network. These parts are logically independent, and a failure in any virtual network will not affect other virtual networks. These virtual networks have different functional features for different needs and services.

### SUMMARY

The following is the summary of the subject matter described herein in detail. This summary is not intended to limit the scope of the claims.

Embodiments of the present invention provide radio access network slice selection methods and apparatus, which select suitable network slices in secondary base stations adjacent to a master base station, so that a UE can perform multi-connection data transmission with master serving network slices of the master base station and secondary serving network slices of the secondary base stations to obtain better data transmission effects.

The invention is set out in the appended set of claims.

### BRIEF DESCRIPTION OF DRAWINGS

FIG. 1 is a schematic diagram of a matching between UEs and RAN/CN slices in a single-connection data transmission mode
FIG. 2 is a schematic diagram of a multi-connection data transmission mode;
FIG. 3 is a flowchart of a radio access network slice selection method for multi-connection data transmission;
FIG. 4 is schematic diagram one of connection between a core network and base stations in a radio access network;
FIG. 5 is schematic diagram two of connection between the core network and the base stations in the radio access network;
FIG. 6 is schematic diagram three of connection between the core network and the base stations in the radio access network;
FIG. 7 is flowchart one of a radio access network slice selection method for multi-connection data transmission according to the present invention;
FIG. 8 is flowchart two of a radio access network slice selection method for multi-connection data transmission according to the present invention;
FIG. 9 is flowchart three of a radio access network slice selection method for multi-connection data transmission according to the present invention;
FIG. 10 is flowchart four of a radio access network slice selection method for multi-connection data transmission according to an embodiment of the present invention;
FIG. 11 is flowchart one of a radio access network slice selection method for multi-connection data transmission according to the present invention;
FIG. 12 is flowchart two of a radio access network slice selection method for multi-connection data transmission according to the present invention;
FIG. 13 is flowchart three of a radio access network slice selection method for multi-connection data transmission according to the present invention;
FIG. 14 is a flowchart of a radio access network slice selection method for multi-connection data transmission according to an embodiment of the present invention;
FIG. 15 is schematic diagram one of a radio access network slice selection apparatus for multi-connection data transmission according to the present invention;
FIG. 16 is schematic diagram two of a radio access network slice selection apparatus for multi-connection data transmission according to the present invention;
FIG. 17 is schematic diagram one of a radio access network slice selection apparatus for multi-connection data transmission according to the present invention; and
FIG. 18 is schematic diagram two of a radio access network slice selection apparatus for multi-connection data transmission according to the present invention

### DETAILED DESCRIPTION

Embodiments of the present invention will be described clearly and completely in conjunction with the drawings in embodiments of the present invention.

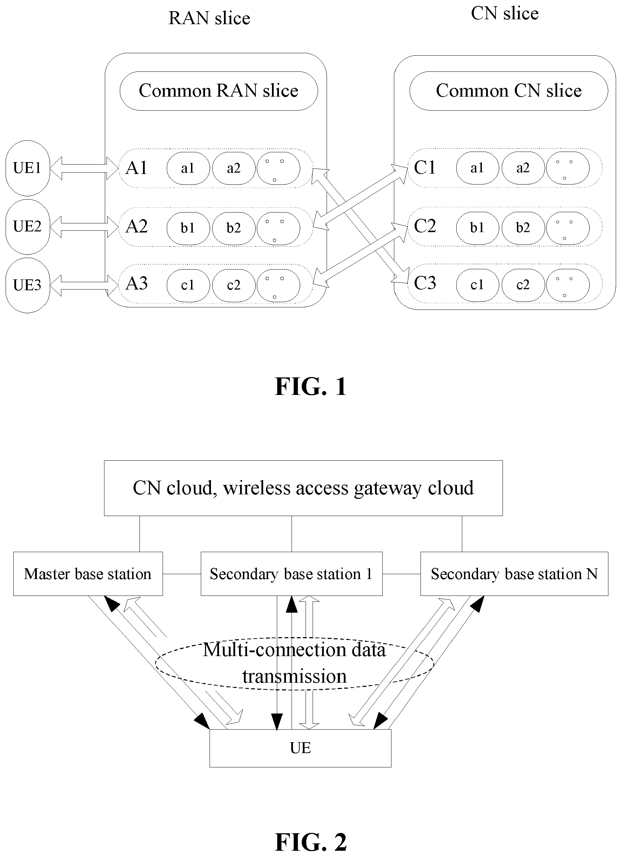

FIG. 1 is an architecture of mobile network slices. A core network (CN) has one common/default CN slice and three dedicated CN slices (C1, C2, C3), which correspond to different operator tenants. A radio access network (RAN) has one common/default RAN slice and three dedicated RAN slices (A1, A2, A3), which correspond to different data service types. For example, type A1 includes ultra-high-speed data services, video services, virtual reality services, etc.; type A2 includes burst small packet data services, such as QQ, WeChat, etc.; type A3 includes low-latency ultra-reliable data services, such as car networking, unmanned driving, telemedicine, etc. A UE user can cause the RAN to select the most matching and suitable network slice (RAN Slice, RAN Part of NW Slice) by reporting its own MDD type attribute and cause the CN to select the most matching and suitable network slice (CN Slice, CN Part of NW Slice) according to the subscription information and type of the UE user. In condition that no dedicated CN/RAN slice can match, the network can reject the access of the UE or match the UE with a common/default CN/RAN slice and perform uncustomized and unified processing. In this public mode, the data transmission service obtained by the UE is usually inferior to the customized service provided by the dedicated slice and thus is inferior in terms of data transmission function and performance.

The above describes a matching between UEs and RAN/CN slices in a single-connection data transmission mode (that is, a single communication base station establishes and maintains a single radio link (RL)). However, with the development of the multi-connection data transmission technology of the 5G system, theUE can establish and maintain multiple wireless connection RLs with multiple communication base stations simultaneously, and perform uplink and downlink transmission of control plane/user plane data and related control feedback simultaneously. In the multi-connection data transmission mode, there is usually merely one master anchor base station (or simply called a master base station) and multiple auxiliary offloading base stations (or simply called secondary base stations). The master base station is in charge of establishment, maintenance, release and other control-plane functions and the secondary base stations are in charge of offloading and forwarding of related user-plane data and other functions, so that a data stream that originally can merely be transmitted between the master base station and the UE can be offloaded and transmitted in multiple RLs, which can balance and effectively utilize radio resources of air interfaces, spatial domains, time domains, frequency domains, etc. For example, the 3rd Generation Partnership Project (3GPP) Long Term Evolution (LTE) or Long Term Evolution Advanced (LTE-A) system introduces the Dual Connectivity (DC) function in Rel-12. The DC function enables a single UE to perform wireless connection and uplink and downlink user service data transmission with a Master Evolved NodeB (MeNB) and a Secondary Evolved NodeB (SeNB) simultaneously. The 3GPP LTE/LTE-A system further introduces the LTE WLAN Aggregation (LWA) function in Rel-13, that is, the aggregation of radio resources between the LTE system and the WLAN system at the radio access layer. The LWA function enables a single UE to perform wireless connection and uplink and downlink user service data transmission with an MeNB and a WLAN secondary base station (WT) simultaneously. In the case of dimension expansion and mashup combination of the preceding typical "dual connection operation", a "multi-connection data transmission mode" containing more RL connections, that is, simultaneous communicative connection between the UE and two or more serving base station nodes, can be generated.

FIG. 2 shows a multi-connection data transmission mode in a mobile communication system. In FIG. 2, the one-way thin arrow line indicates the transmission of control signaling, and the two-way thick arrow line indicates the transmission of user service data. In the multi-connection data transmission mode, the UE needs to perform reasonable RAN slice selection with each base station node participating in the coordinated offloading, so that the UE can enjoy better slice services not only in the single-connection data transmission mode, but also in the multi-connection data transmission mode.

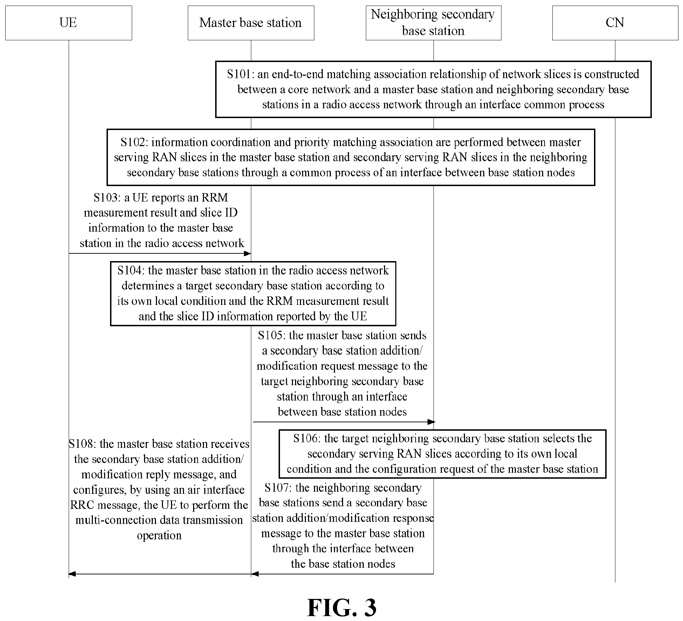

Referring to FIG. 3, this example provides a radio access network slice selection method. The method includes the steps described below.

In S101, an end-to-end matching association relationship of network slices is constructed between a core network and a master base station and neighboring secondary base stations in a radio access network through an interface common process.

The division and matching association of the respective common or dedicated slices of the core network and the radio access network are formed through the end-to-end matching and association between the network slices of the core network and all base stations under the core network. The core network slices are CN slices, and the radio access network slices are RAN slices. As the slices are divided, the network functions and network resource configurations corresponding to each slice are also determined.

In S102, information coordination and priority matching association are performed between master serving RAN slices in the master base station and secondary serving RAN slices in the neighboring secondary base stations through a common process of an interface between base station nodes.

The base station nodes in the radio access network notify real-time slicing information and working status of their respective RAN slices to each other and coordinate the real-time slicing information and working status of their respective RAN slices between each other through a common signaling process. The slicing information and working status of their respective RAN slices include RAN slice information contained in the current configuration of the base station nodes, whether the working status of each RAN slice is normal, load status, etc.

According to the operator's needs and predefined manners, the master base station configures a priority association relationship between its own internal RAN slices and RAN slices in the secondary base stations. For example, the master base station BS1 has three dedicated master RAN slices (DMA1, DMA2, DMA3) and one common/default master RAN slice (CMA), and a neighboring secondary base station has two dedicated secondary RAN slices (DSA1, DSA2) and one common/default secondary RAN slice (CSA), then the master base station needs to construct and/or modify and maintain a relation table that is legal and contains priority association matching information like the following table in advance:
DMA1-{DSA1 (first priority), DSA2 (second priority), CSA (third priority)}, indicating that DMA1 in the master base station is first matched and associated with DSA1 to form a multi-connection data transmission operation; and then matched and associated with DSA2 and CSA in terms of the association sequence.
DMA2-{DSA2 (first priority), CSA (second priority), DSA1 (third priority)}, indicating that DMA2 in the master base station is first matched and associated with DSA2 to form a multi-connection data transmission operation; and then matched and associated with CSA and DSA1 in terms of the association sequence.
DMA3-{CSA (first priority), DSA1 (second priority)}, indicating that DMA3 in the master base station is first matched and associated with CSA to form a multi-connection data transmission operation; and then matched and associated with DSA1 in terms of the association sequence.
CMA-{CSA (first priority)}, indicating that CMA in the master base station is first matched and associated with CSA to form a multi-connection data transmission operation; and cannot be matched and associated with other RAN slices in the secondary base stations.

In S103, a UE reports an RRM measurement result and slice ID information to the master base station in the radio access network.

It is to be understood that, due to the mobility of theUE or the change of the wireless environment condition, the UE reports the radio resource management (RRM) measurement result to the master base station, and triggers the establishment or modification of a multi-connection data transmission operation by the master base station.

In S104, the master base station in the radio access network determines a target secondary base station according to its own local condition and the RRM measurement result and the slice ID information reported by the UE.

In the process of establishing and maintaining the multi-connection data transmission operation for the UE, the master base station needs to transmit the preceding "relation table of priority association matching information" to the secondary base station through a dedicated signaling process between the base station nodes. The specific slice ID or MDD can reflect the current service features of the specific UE. Therefore, as a special case, the master base station can also use the slice ID or MDD information of the currently serving UE as the "relation table of priority association matching information" and transmit such slice ID or MDD information to the secondary base station.

Through the preceding dedicated signaling process, the "relation table of priority association matching information" is sent to the secondary base station to serve as a reference for selection of the secondary serving RAN slices. When the "relation table of priority association matching information" contains merely the slice ID or MDD information of the UE, there is no problem of priority selection on the secondary base station side, and matching and selection is performed according to the unique slice ID or MDD information sent by the master base station.

In S105, the master base station sends a secondary base station addition/modification request message to the target neighboring secondary base station through an interface between base station nodes.

The secondary base station addition/modification request message sent by the master base station through the interface between the base station nodes includes UE information of priority matching association between master serving RAN slices of the current master base station and secondary serving RAN slices related to the master base station, and also includes other related configuration information of the multi-connection operation by the target neighboring base station. The preceding information may include only unique slice ID or MDD information in a certain case.

In S106, the target neighboring secondary base station selects the secondary serving RAN slices according to its own local condition and the configuration request of the master base station.

The target neighboring secondary base station selects corresponding secondary base station RAN slices according to its own local condition on the basis of the "relation table of priority association matching information", which may include unique slice ID or MDD information in a certain case. Slices are selected from the highest priority. In condition that the condition and working status of a highest-priority slice applies, this highest-priority slice is selected as the secondary base station RAN slice of the UE; otherwise, a subsequent RAN slice is selected for matching and association according to the priority. In condition that the "relation table of priority association matching information" includes slice ID or MDD information, the matching and selection is directly performed according to the unique slice ID or MDD information.

In S107, the neighboring secondary base stations send a secondary base station addition/modification response message to the master base station through the interface between the base station nodes.

The secondary base stations notify the master base station of the result of the finally matched and selected secondary base station RAN slices, including slice ID or MDD information, through the dedicated signaling process between the base station nodes. Then, the master base station establishes or maintains the multi-connection data transmission operation for the UE through an air interface process. The UE matches and associates with a RAN slice with a priority that is as high as possible on the master base station and, meanwhile, matches and associates with a RAN slice with a priority that is as high as possible on the secondary base station.

In S108, the master base station receives the secondary base station addition/modification response message, and configures, by using an air interface RRC message, the UE to perform the multi-connection data transmission operation.

It is to be understood that, after receiving the secondary base station addition/modification response message sent from the secondary base stations, the master base station can correspondingly configure the UE to perform the multi-connection data transmission operation.

This example describes the preceding example in detail through a process of selecting network slices in base stations in a radio access network. The following describes four processes of a multi-connection data transmission operation using four base stations: NG-Core (Next Generation Core), eLTE eNB, NR gNB1 and NR gNB2.

### Example one:

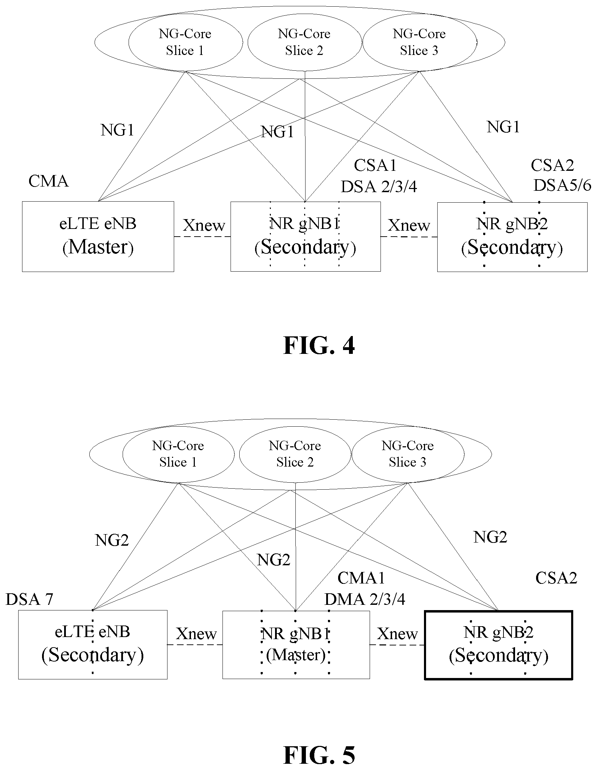

Referring to FIG. 4, NG-Core is divided into three CN slices: Enhanced Mobile Broadband (eMBB), Ultra Reliable Low Latency Communication (URLLC) and Massive Machine Type Communication (mMTC) according to service types. The three CN slices are NG-Core Slice1, NG-Core Slice2 and NG-Core Slice3. As a master base station, eLTE eNB with the largest radio signal coverage area is not divided into dedicated RAN slices, that is, has merely one common/default RAN slice. NR gNB1 with a smaller radio signal coverage area can serve as a secondary base station for data offloading. NR gNB1 is configured with and divided into one common/default RAN slice and three dedicated RAN slices that correspond to three types of services: eMBB, URLLC and mMTC. NR gNB2 with a smaller radio signal coverage area can serve as another secondary base station for data offloading. NR gNB2 is configured with and divided into one common/default RAN slice and two dedicated RAN slices that correspond to two types of services: eMBB and mMTC (therefore, NR gNB2 cannot efficiently support URLLC-type services). At a certain moment, UE1 enters the common coverage area of the respective service signals of eLTE eNB, NR gNB1 and NR gNB2 base stations, and thus has a radio condition for multi-connection data transmission. eLTE eNB, NR gNB1 and NR gNB2 are base stations in NG-RAN. The interface between NG-Core and NG-RAN is NG1. It can be seen from FIG. 4 that the three CN slices in NG-Core are connected to eLTE eNB, NR gNB 1 and NR gNB2 in NG-RAN through NG1.

The CMA in FIG. 4 is a common/default master RAN slice, that is, a common network slice inside the master base station. The CMA supports all legal services and terminals. The CSA is a common/default secondary RAN slice, that is, a common network slice inside the secondary base station. The CSA supports all legal services and terminals. The DSA is a dedicated secondary RAN slice, that is, a dedicate network slice inside the secondary base station. The DSA supports specific types of services and terminals. The DSA is aimed to provide a customized optimal data transmission service. The DSA2/3/4 correspond to eMBB, URLLC and mMTC respectively. The DSA5/6 correspond to eMBB and mMTC respectively.

In the preceding scenario, steps of radio access network slice selection in the case of multi-connection data transmission are described below.

In step 1, on the basis of a common process CN-RAN Slice Info Exchange of the NG1 standard interface between NG-Core and eLTE eNB, NR gNB1 and NR gNB2, end-to-end matching and association of network slices is constructed between the core network and all base stations served by the core network to form division into and matching and association between respective common or dedicated CN slices/RAN slices.

In step 2, information coordination and priority matching association of constructed master serving RAN slices and secondary serving RAN slices are performed between the master base station eNB and the secondary base stations gNB1 and gNB2 by using a common process RAN-RAN Slice Info Exchange of the Xnew standard interface between the base station nodes, so that the master base station eNB can acquire the RAN slice configuration and division inside the neighboring secondary base stations gNB1 and gNB2. On the basis of the result of the preceding RAN Slice Info coordination, the master base station eNB can determine a specific priority matching association relationship between the RAN slices in the neighboring secondary base stations and the RAN slices of the master base station.

In step 3, as the served UE1 moves or the wireless environmental condition changes, UE1 reports the RRM measurement result and the slice ID information of the target serving cell under the secondary base station to trigger the master base station eNB to establish or modify the multi-connection data transmission operation.

In step 4, on the basis of the RRM measurement result reported by UE1 and the local condition of the master base station eNB, the master base station eNB determines to perform the multi-connection data transmission operation and selects gNB1 as the target serving secondary base station to perform data offloading.

In step 5, the master base station eNB sends the message Secondary Node Addition/Modification Request to the secondary base station gNB1 through the Xnew interface between the base stations. The message includes a priority matching association relationship between the master serving RAN slice CMA of UE1 in the current serving master base station eNB and related secondary serving RAN slices (which can be expressed by specific logical identifiers) as described below:

CMA-{DSA2 (eMBB first priority), CSA1 (second priority), DSA3 (URLLC third priority), DSA4 (mMTC fourth priority)}, and other configuration-related information of the multi-connection operation of the secondary base station gNB1.

In step 6, after receiving and analyzing the message Secondary Node Addition/Modification Request, the secondary base station gNB 1 selects secondary serving RAN slices according to the configuration request and the local condition of the master base station eNB. By selecting from the highest-priority RAN slice requested by the master base station eNB, the secondary base station gNB1 finally determines to provide DSA2 (eMBB first priority) as a secondary serving RAN slice participating in the multi-connection.

In step 7, the secondary base station gNB1 sends the message Secondary Node Addition/Modification Response to the master base station eNB through the Xnew interface between the base stations. The message includes secondary serving RAN slice information DSA2 selected by the secondary base station gNB1 and other reply configuration-related information of the multi-connection operation.

In step 8, after receiving and analyzing the message Secondary Node Addition/Modification Response, the master base station eNB confirms that all the configuration information of the multi-connection operation provided by the secondary base station gNB1 can be accepted, and configures, through the air interface RRC message (re)configuration, the UE1 to perform the multi-connection data transmission operation. Then, UE1 performs a dual connection eMBB data transmission operation on the basis of the CMA master serving RAN slice in the eNB and the DSA2 secondary serving RAN slice in the gNB1.

### Example two:

Referring to FIG. 5, NG-Core is divided into three CN slices: eMBB, URLLC and mMTC according to service types. As a master base station, NR gNB1 with the largest radio signal coverage area is configured with and divided into one common/default RAN slice and three dedicated RAN slices that correspond to three types of services: eMBB, URLLC and mMTC. eLTE eNB with a smaller radio signal coverage area can serve as a secondary base station for data offloading. eLTE eNB is configured with and divided into one common/default RAN slice and one dedicated RAN slice that corresponds to eMBB services. NR gNB2 with a smaller radio signal coverage area can serve as another secondary base station for data offloading. NR gNB2 is configured with and divided into one common/default RAN slice and two dedicated RAN slices that correspond to two types of services: eMBB and URLLC. At a certain moment, UE2 enters the common coverage area of the respective service signals of eLTE eNB, NR gNB1 and NR gNB2 base stations, and thus has a radio condition for multi-connection data transmission. In FIG. 5, the DMA is a dedicated master RAN slice, that is, a dedicate network slice inside the master base station. The DMA supports specific types of services and terminals. The DMA is aimed to provide a customized optimal data transmission service.

In the preceding scenario, steps of radio access network slice selection in the case of multi-connection data transmission are described below.

In step 1, on the basis of a common process CN-RAN Configuration Update of the NG2 standard interface between NG-Core and eLTE eNB, NR gNB1 and NR gNB2, end-to-end matching and association of network slices is constructed between the core network and all base stations served by the core network to form division into and matching and association between respective common or dedicated CN slices/RAN slices.

In step 2, information coordination and priority matching association of constructed master serving RAN slices and secondary serving RAN slices are performed between the master base station gNB1 and the secondary base stations eNB and gNB2 by using a common process CN-RAN Configuration Update of the Xnew standard interface between the base station nodes, so that the master base station gNB1 can learn the RAN slice configuration and division inside the neighboring secondary base stations eNB and gNB2. On the basis of the result of the preceding RAN Slice Info coordination, the master base station gNB1 can determine a specific priority matching association relationship between the RAN slices in the neighboring secondary base stations and the RAN slices of the master base station.

In step 3, as the served UE2 moves or the wireless environmental condition changes, UE2 reports the RRM measurement result and the slice ID information of the target serving cell under the secondary base station to trigger the master base station gNB1 to establish or modify the multi-connection data transmission operation.

In step 4, on the basis of the RRM measurement result reported by UE2 and the local condition of the master base station gNB1, the master base station gNB1 determines to perform the multi-connection data transmission operation and selects gNB2 as the target serving secondary base station to perform data offloading.

In step 5, the master base station gNB1 sends the message Secondary Node Addition/Modification Request to the secondary base station gNB2 through the Xnew interface between the base stations. The message includes a priority matching association relationship between the master serving RAN slice DMA3 of UE2 in the current serving master base station gNB1 and related secondary serving RAN slices (which can be expressed by specific logical identifiers) as described below:
DMA3-{DSA6 (URLLC first priority), CSA2 (second priority), DSA5 (eMBB third priority)}, and other configuration-related information of the multi-connection operation of the secondary base station gNB2.

In step 6, after receiving and analyzing the message Secondary Node Addition/Modification Request, the secondary base station gNB2 selects secondary serving RAN slices according to the configuration request and the local condition of the master base station gNB1. By selecting from the highest-priority RAN slice requested by the master base station gNB1, the secondary base station gNB2 finally determines to provide DSA6 (URLLC first priority) as a secondary serving RAN slice participating in the multi-connection.

In step 7, the secondary base station gNB2 sends the message Secondary Node Addition/Modification Response to the master base station gNB1 through the Xnew interface between the base stations. The message includes secondary serving RAN slice information DSA6 selected by the secondary base station gNB2 and other reply configuration-related information of the multi-connection operation.

In step 8, after receiving and analyzing the message Secondary Node Addition/Modification Response, the master base station gNB 1 confirms that all the configuration information of the multi-connection operation provided by the secondary base station gNB2 can be accepted, and configures, through the air interface RRC message (re)configuration, the UE2 to perform the multi-connection data transmission operation. Then, UE2 performs a dual connection URLLC data transmission operation on the basis of the DMA3 master serving RAN slice in the gNB1 and the DSA6 secondary serving RAN slice in the gNB2.

### Example three:

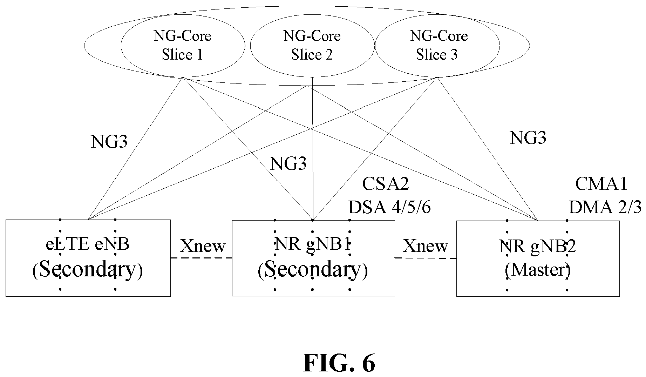

Referring to FIG. 6, NG-Core is divided into three CN slices: eMBB, URLLC and mMTC according to service types. As a master base station, NR gNB2 with the largest radio signal coverage area is configured with and divided into one common/default RAN slice and two dedicated RAN slices that correspond to two types of services: eMBB and URLLC. eLTE eNB with a smaller radio signal coverage area can serve as a secondary base station for data offloading. eLTE eNB is configured with and divided into one common/default RAN slice and two dedicated RAN slices that correspond to two types of services: eMBB and mMTC. NR gNB1 with a smaller radio signal coverage area can serve as another secondary base station for data offloading. NR gNB1 is configured with and divided into one common/default RAN slice and three dedicated RAN slices that correspond to three types of services: eMBB, URLLC and mMTC. At a certain moment, UE3 enters the common coverage area of the respective service signals of eLTE eNB, NR gNB 1 and NR gNB2 base stations, and thus has a radio condition for multi-connection data transmission.

In the preceding scenario, steps of radio access network slice selection in the case of multi-connection data transmission are described below.

In step 1, on the basis of a common process CN-RAN Configuration Update of the NG3 standard interface between NG-Core and eLTE eNB, NR gNB1 and NR gNB2, end-to-end matching and association of network slices is constructed between the core network and all base stations served by the core network to form division into and matching and association between respective common or dedicated CN slices/RAN slices.

In step 2, information coordination and priority matching association of constructed master serving RAN slices and secondary serving RAN slices are performed between the master base station gNB2 and the secondary base stations eNB and gNB1 by using a common process CN-RAN Configuration Update of the Xnew standard interface between the base station nodes, so that the master base station gNB2 can learn the RAN slice configuration and division inside the neighboring secondary base stations eNB and gNB 1. On the basis of the result of the preceding RAN Slice Info coordination, the master base station gNB2 can determine a specific priority matching association relationship between the RAN slices in the neighboring secondary base stations and the RAN slices of the master base station.

In step 3, as the served UE3 moves or the wireless environmental condition changes, UE3 reports the RRM measurement result and the slice ID information of the target serving cell under the secondary base station to trigger the master base station gNB2 to establish or modify the multi-connection data transmission operation.

In step 4, on the basis of the RRM measurement result reported by UE3 and the local condition of the master base station gNB2, the master base station gNB2 determines to perform the multi-connection data transmission operation and selects eNB and gNB1 as the target serving secondary base stations to perform data offloading.

In step 5, the master base station gNB2 sends the message Secondary Node Addition/Modification Request to the secondary base stations eNB and gNB 1 through the Xnew interface between the base stations. The message includes a priority matching association relationship between the master serving RAN slice DMA2 of UE3 in the current serving master base station gNB2 and related secondary serving RAN slices (which can be expressed by specific logical identifiers) as described below:
DMA2-{DSA7 (eMBB first priority), CSA3 (second priority)}, and other configuration-related information of the multi-connection operation of the secondary base station eNB.
DMA2-{DSA4 (eMBB first priority), CSA2 (second priority)}, and other configuration-related information of the multi-connection operation of the secondary base station gNB1.

In step 6, after receiving and analyzing the message Secondary Node Addition/Modification Request, the secondary base stations eNB and gNB1 separately select secondary serving RAN slices according to the configuration request and the local condition of the master base station gNB2. By selecting from the highest-priority RAN slice requested by the master base station gNB2, the secondary base stations eNB and gNB 1 finally determine to provide DSA7 (eMBB first priority) as a secondary serving RAN slice participating in the multi-connection. Since the DSA4 (eMBB first priority) slice load in gNB1 is excessively heavy, gNB1 determines to provide CSA2 (second priority) as a secondary serving RAN slice participating in the multi-connection.

In step 7, the secondary base stations eNB and gNB1 separately send the message Secondary Node Addition/Modification Response to the master base station gNB2 through the Xnew interface between the base stations. The message includes secondary serving RAN slice information DSA7 and CSA2 selected by the secondary base stations eNB and gNB1 respectively and other reply configuration-related information of the multi-connection operation.

In step 8, after receiving and analyzing the message Secondary Node Addition/Modification Response, the master base station gNB2 confirms that all the configuration information of the multi-connection operation provided by the secondary base stations eNB and gNB1 can be accepted, and configures, through the air interface RRC message (re)configuration, the UE3 to perform the multi-connection data transmission operation. Then, UE3 performs a triple connection eMBB data transmission operation on the basis of the DMA2 master serving RAN slice in the gNB2, the DSA7 secondary serving RAN slice in the eNB, and the CSA2 secondary serving RAN slice in the gNB1.

### Example four:

Referring to FIG. 5, which is the same as the illustration in example two, this example four is used by neighboring secondary base stations to select network slices according to the unique slice ID or MDD value reported by UE4. NG-Core is divided into three CN slices: eMBB, URLLC and mMTC according to service types. As a master base station, NR gNB1 with the largest radio signal coverage area is configured with and divided into one common/default RAN slice and three dedicated RAN slices that correspond to three types of services: eMBB, URLLC and mMTC. eLTE eNB with a smaller radio signal coverage area can serve as a secondary base station for data offloading. eLTE eNB is configured with and divided into one common/default RAN slice and one dedicated RAN slice that corresponds to eMBB services. NR gNB2 with a smaller radio signal coverage area can serve as another secondary base station for data offloading. NR gNB2 is configured with and divided into one common/default RAN slice and two dedicated RAN slices that correspond to two types of services: eMBB and URLLC. At a certain moment, UE4 enters the common coverage area of the respective service signals of eLTE eNB, NR gNB 1 and NR gNB2 base stations, and thus has a radio condition for multi-connection data transmission.

In the preceding scenario, steps of radio access network slice selection in the case of multi-connection data transmission are described below.

In step 1, on the basis of a common process CN-RAN Configuration Update of the NG2 standard interface between NG-Core and eLTE eNB, NR gNB1 and NR gNB2, end-to-end matching and association of network slices is constructed between the core network and all base stations served by the core network to form division into and matching and association between respective common or dedicated CN slices/RAN slices.

In step 2, information coordination and priority matching association of constructed master serving RAN slices and secondary serving RAN slices are performed between the master base station gNB1 and the secondary base stations eNB and gNB2 by using a common process CN-RAN Configuration Update of the Xnew standard interface between the base station nodes, so that the master base station gNB1 can learn the RAN slice configuration and division inside the neighboring secondary base stations eNB and gNB2. On the basis of the result of the preceding RAN Slice Info coordination, the master base station gNB1 can determine a specific priority matching association relationship between the RAN slices in the neighboring secondary base stations and the RAN slices of the master base station. The master base station gNB1 determines that only RAN slices of the same type/tenant between the master base station and the secondary base stations can be matched and associated with each other, so the matching and association is performed on the basis of the unique slice ID or MDD value.

In step 3, as the served UE4 moves or the wireless environmental condition changes, UE4 reports the RRM measurement result and the slice ID information of the target serving cell under the secondary base station to trigger the master base station gNB1 to establish or modify the multi-connection data transmission operation.

In step 4, on the basis of the RRM measurement result reported by UE4 and the local condition of the master base station gNB1, the master base station gNB1 determines to perform the multi-connection data transmission operation and selects gNB2 as the target serving secondary base station to perform data offloading.

In step 5, the master base station gNB1 sends the message Secondary Node Addition/Modification Request to the secondary base station gNB2 through the Xnew interface between the base stations. The message includes a priority matching association relationship between the master serving RAN slice DMA3 of UE4 in the current serving master base station gNB 1 and related secondary serving RAN slices (which can be expressed by the unique slice ID or MDD value reported by UE4) as described below:
DMA2-{DSA5 (the unique secondary RAN slice with which eMBB can be matched and associated), and other configuration-related information of the multi-connection operation of the secondary base station gNB2.

In step 6, after receiving and analyzing the message Secondary Node Addition/Modification Request, the secondary base station gNB2 selects secondary serving RAN slices according to the configuration request and the local condition of the master base station gNB1. The secondary base station gNB2 selects the unique matched candidate DSA5 requested by the master base station gNB1 as a secondary serving RAN slice participating in the multi-connection.

In step 7, the secondary base station gNB2 sends the message Secondary Node Addition/Modification Response to the master base station gNB1 through the Xnew interface between the base stations. The message includes secondary serving RAN slice information DSA5 selected by the secondary base station gNB2 and other reply configuration-related information of the multi-connection operation.

In step 8, after receiving and analyzing the message Secondary Node Addition/Modification Response, the master base station gNB 1 confirms that all the configuration information of the multi-connection operation provided by the secondary base station gNB2 can be accepted, and configures, through the air interface RRC message (re)configuration, the UE4 to perform the multi-connection data transmission operation. Then, UE4 performs a dual connection eMBB data transmission operation on the basis of the DMA2 master serving RAN slice in the gNB1 and the DSA5 secondary serving RAN slice in the gNB2.

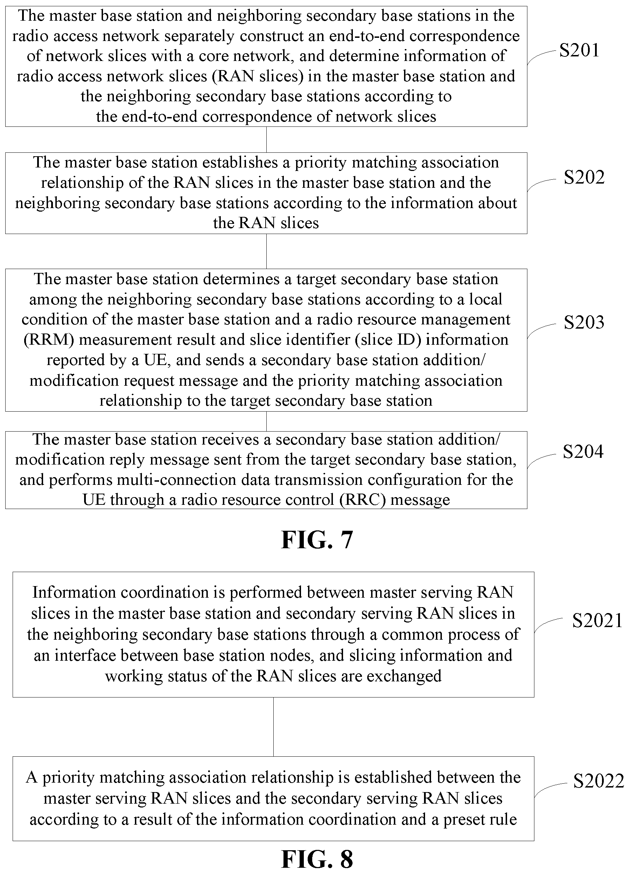

Referring to FIG. 7, the present invention provides a radio access network slice selection method, applied to a master base station in a radio access network. The method includes the steps described below.

In step S201, the master base station and neighboring secondary base stations in the radio access network separately construct an end-to-end correspondence of network slices with a core network, and determine information of radio access network slices (RAN slices) in the master base station and the neighboring secondary base stations according to the end-to-end correspondence of network slices.

It is to be understood that RAN slices can be divided into common and dedicated network slices. RAN slices can be divided into common and dedicated network slices in the master base station and common and dedicated network slices in the secondary base stations. After the RAN slices are determined, the respective network functions and network resource configuration of the RAN slices are determined accordingly. Here, the end-to-end correspondence of network slices is constructed. The end-to-end data transmission direction is generally from a network source node that generates the service data to a network end node that receives the service data. In S202, the master base station establishes a priority matching association relationship of the RAN slices in the master base station and the neighboring secondary base stations according to the information of the RAN slices.

Referring to FIG. 8, step S202 includes steps S2021 and S2022.

In S2021, information coordination is performed between master serving RAN slices in the master base station and secondary serving RAN slices in the neighboring secondary base stations through a common process of an interface between base station nodes, and slicing information and working status of the RAN slices are exchanged.

In S2022, a priority matching association relationship is established between the master serving RAN slices and the secondary serving RAN slices according to a result of the information coordination and a preset rule.

The RAN slices in the master base station serve as master serving slices, and the RAN slices in the neighboring secondary base stations serve as secondary serving slices. The master serving slices and the secondary serving slices notify their respective real-time division status and working status of RAN slices to each other and coordinate their respective real-time division status and working status of RAN slices with each other to ensure normal working interaction between the master serving slices and the secondary serving slices.

The master base station constructs a priority matching association relationship with the RAN slices in the secondary base stations in advance. This priority matching association relationship is used for priority ranking when each network slice in the master base station selects network slices in the secondary base stations to from a multi-connection data transmission operation. A "relation table of priority association matching information" is generated according to the priority matching association relationship.

In S203, the master base station determines a target secondary base station among the neighboring secondary base stations according to a local condition of the master base station and a radio resource management (RRM) measurement result and slice identifier (slice ID) information reported by a UE, and sends a secondary base station addition/modification request message and the priority matching association relationship to the target secondary base station.

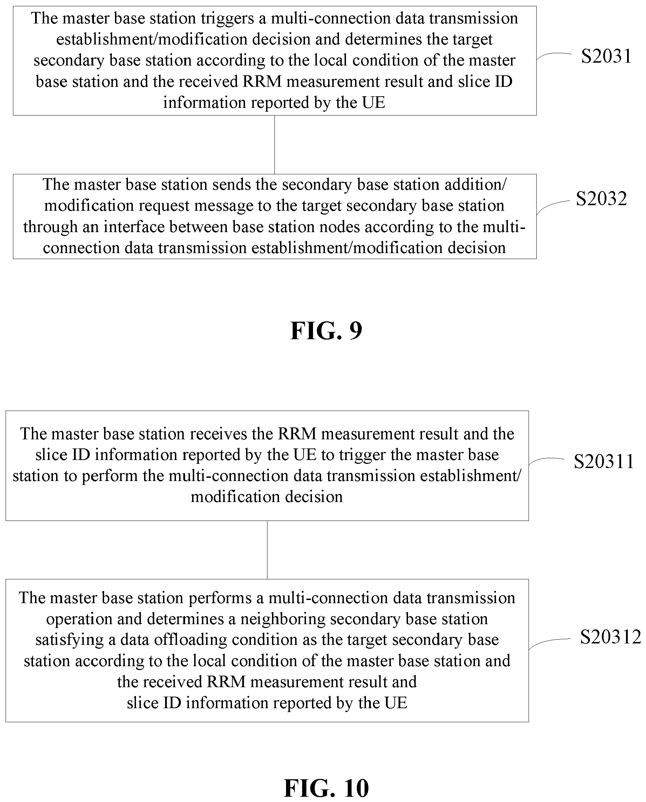

Referring to FIG. 9, step S203 includes steps S2031 and S2032.

In S2031, the master base station triggers a multi-connection data transmission establishment/modification decision and determines the target secondary base station according to the local condition of the master base station and the received RRM measurement result and slice ID information reported by the UE.

In S2032, the master base station sends the secondary base station addition/modification request message to the target secondary base station through an interface between base station nodes according to the multi-connection data transmission establishment/modification decision.

Referring to FIG. 10, step S2031 includes steps S20311 and S20312.

In S20311, the master base station receives the RRM measurement result and the slice ID information reported by the UE to trigger the master base station to perform the multi-connection data transmission establishment/modification decision.

In S20312, the master base station performs a multi-connection data transmission operation and determines a neighboring secondary base station satisfying a data offloading condition as the target secondary base station according to the local condition of the master base station and the received RRM measurement result and slice ID information reported by the UE.

The movement of the UE and the change of the wireless environment condition cause the access status of the UE in the base station to change. Therefore, the master base station makes the multi-connection data transmission establishment/modification decision for the UE according to the RRM measurement result and slice ID information of the UE and the local condition of the master base station, and offloads a part of the task amount in the network slices of the master base station to the target secondary base station to cause the UE to be connected to the optimal slice set of multiple RAN base station nodes in the multi-connection transmission mode. Here, the target secondary base station may be one or more secondary base stations adjacent to the master base station. Through the preceding process, master serving RAN slices and secondary serving RAN slices can be better adapted to different types, different users and different service features of the UE, so that the UE obtains better data transmission effects. Here, the local condition of the master base station includes the division condition of the RAN slices, whether the working status of the RAN slices is normal, the load status of the RAN slices, the resource utilization of the RAN slices, etc.

In the process of establishing and maintaining the multi-connection data transmission operation, the master base station transmits a "relation table of priority association matching information" to the target secondary base station, and then the target secondary base station can select, according to the secondary base station addition/modification request message, better network slices from itself so as to be adapted to the data transmission task of the master base station.

In S204, the master base station receives a secondary base station addition/modification response message sent from the target secondary base station, and performs multi-connection data transmission configuration for the UE by use of a radio resource control (RRC) message, where the secondary base station addition/modification response message includes target secondary serving RAN slices selected by the target secondary base station according to the priority matching association relationship.

It is to be understood that the secondary base station addition/modification response message sent by the target secondary base station to the master base station includes the result of the RAN slices finally selected by the target secondary base station, including the slice ID or MDD information. The master base station is informed through a dedicated signaling process between the base station nodes, and then the master base station establishes or maintains the multi-connection data transmission operation for the UE through the air interface process. The UE matches and associates with a RAN slice with a priority that is as high as possible on the master base station and, meanwhile, matches and associates with a RAN slice with a priority that is as high as possible on the secondary base station.

The change of the RAN slices with which the UE is matched and associated on the master base station usually causes the RAN slices with which the UE is matched and associated on the secondary base stations to change. On the contrary, the change of the RAN slices with which the UE is matched and associated on the secondary base stations may not cause the RAN slices with which the UE is matched and associated on the master base station to change.

The UE can establish multi-connection data transmission with RAN slices of the same type or tenant and can also establish multi-connection data transmission with RAN slices of different types or tenants.

This embodiment of the present invention provide a radio access network slice selection method, in which a master base station sends multi-connection data transmission configuration request information to neighboring secondary base stations according to an RRM measurement result and slice ID information reported by a UE, the neighboring secondary base stations make a selection of secondary serving RAN slices according to a configuration request and a local condition of the master base station, and the master base station performs multi-connection data transmission configuration for the UE according to selection information of the secondary serving RAN slices, so that the UE is in an optimal slice set of multiple base station nodes in the radio access network so as to be better adapted to the type, user and service features of the UE and obtain better data transmission effects.

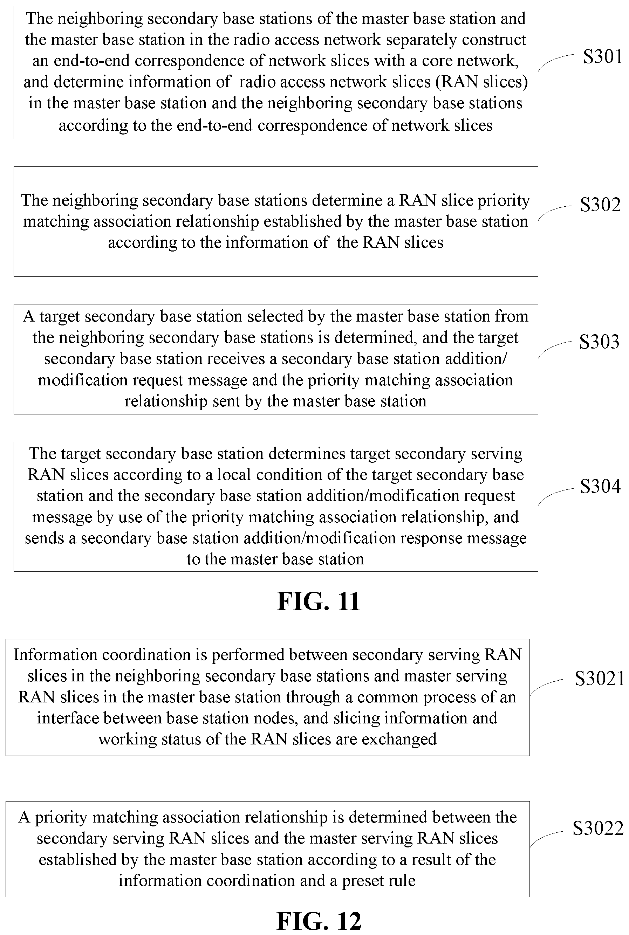

Referring to FIG. 11, this invention provides a radio access network slice selection method, applied to neighboring secondary base stations of a master base station in a radio access network. The method includes the steps described below.

In S301, the neighboring secondary base stations of the master base station and the master base station in the radio access network separately construct an end-to-end correspondence of network slices with a core network, and determine information of radio access network slices (RAN slices) in the master base station and the neighboring secondary base stations according to the end-to-end correspondence of network slices.

It is to be understood that RAN slices can be divided into common and dedicated network slices. RAN slices can be divided into common and dedicated network slices in the master base station and common and dedicated network slices in the secondary base stations. After the RAN slices are determined, the respective network functions and network resource configuration of the RAN slices are determined accordingly.

In S302, the neighboring secondary base stations determine a RAN slice priority matching association relationship, which is established by the master base station according to the information of the RAN slices.

Referring to FIG. 12, step S302 includes steps S3021 and S3022.

In S3021, information coordination is performed between secondary serving RAN slices in the neighboring secondary base stations and master serving RAN slices in the master base station through a common process of an interface between base station nodes, and slicing information and working status of the RAN slices are exchanged.

In S3022, a priority matching association relationship is determined between the secondary serving RAN slices and the master serving RAN slices, which is established by the master base station according to a result of the information coordination and a preset rule.

The RAN slices in the master base station serve as master serving slices, and the RAN slices in the neighboring secondary base stations serve as secondary serving slices. The master serving slices and the secondary serving slices notify their respective real-time division status and working status of RAN slices to each other and coordinate their respective real-time division status and working status of RAN slices with each other to ensure normal working interaction between the master serving slices and the secondary serving slices.

The master base station constructs a priority matching association relationship with the RAN slices in the secondary base stations in advance. This priority matching association relationship is used for priority ranking when each network slice in the master base station selects network slices in the secondary base stations to from a multi-connection data transmission operation. A "relation table of priority association matching information" is generated according to the priority matching association relationship.

In S303, a target secondary base station selected by the master base station from the neighboring secondary base stations is determined, and the target secondary base station receives a secondary base station addition/modification request message and the priority matching association relationship sent from the master base station.

It is to be understood that after the target secondary base station is selected, the target secondary base station receives the secondary base station addition/modification request message sent by the master base station. This message includes the priority matching association relationship between the master serving RAN slices in the master base station and the secondary serving RAN slices. Here, the neighboring secondary base stations may also actively establish the priority matching association relationship, but usually the master base station as an anchor control source actively establishes the priority matching association relationship.

In S304, the target secondary base station determines target secondary serving RAN slices by use of the priority matching association relationship according to a local condition of the target secondary base station and the secondary base station addition/modification request message, and sends a secondary base station addition/modification response message to the master base station, where the secondary base station addition/modification response message includes the target secondary serving RAN slices selected by the target secondary base station according to the priority matching association relationship.

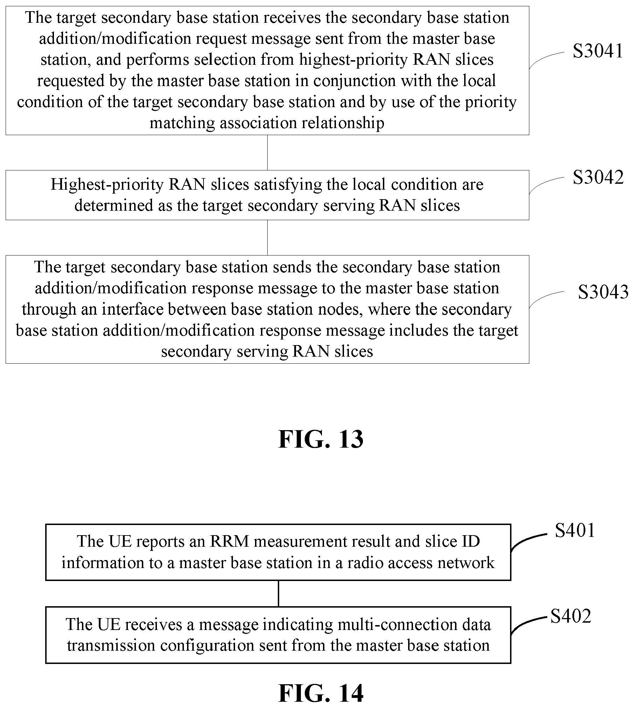

Referring to FIG. 13, step S304 includes steps S3041 through S3043.

In S3041, the target secondary base station receives the secondary base station addition/modification request message sent from the master base station, and performs selection from highest-priority RAN slices requested by the master base station in conjunction with the local condition of the target secondary base station and by use of the priority matching association relationship.

In S3042, highest-priority RAN slices satisfying the local condition are determined as the target secondary serving RAN slices.

In S3043, the target secondary base station sends the secondary base station addition/modification response message to the master base station through an interface between base station nodes, where the secondary base station addition/modification response message includes the target secondary serving RAN slices.

The priority matching association relationship may include only the slice ID or MDD information reported by the UE. Since the specific slice ID or MDD information can reflect the current service features of the specific UE, as a special case, the master base station may include the slice ID or MDD information of the currently serving UE in the priority matching association relationship (for example, the "relation table of priority association matching information") and then send the slice ID or MDD information to the secondary base stations through a dedicated signaling process so that reference can be made to the slice ID or MDD information when secondary serving slices are selected. In this case, the secondary base stations do not need to select according to priority, and need to perform matching and selection according to the unique slice ID or MDD information sent by the master base station.

Therefore, step S304 further includes the step described below.

When the priority matching association relationship merely includes slice ID or MDD information reported by the UE, the target secondary base station selects the target secondary serving RAN slices according to the slice ID or MDD information.

After receiving the secondary base station addition/modification request message sent from the master base station, the target secondary base station determines target secondary serving RAN slices by use of the priority matching association relationship according to the local condition of the target secondary base station. After selecting the target secondary serving RAN slices, the target secondary base station sends the secondary base station addition/modification response message including the target secondary serving RAN slices to the master base station to make the master base station acquire the slice selection of the target secondary base station. The secondary base station addition/modification response message further includes other reply configuration-related information of the multi-connection operation in addition to the target secondary serving RAN slices. Here, the local condition of the neighboring secondary base station includes the division condition of the RAN slices, whether the working status of the RAN slices is normal, the load status of the RAN slices, the resource utilization of the RAN slices, etc.

This embodiment of the present invention provides a radio access network slice selection method, in which a master base station sends multi-connection data transmission configuration request information to neighboring secondary base stations according to an RRM measurement result and slice ID information reported by a UE, the neighboring secondary base stations make a selection of secondary serving RAN slices according to a configuration request and a local condition of the master base station, and the master base station performs multi-connection data transmission configuration for the UE according to selection information of the secondary serving RAN slices, so that the UE is in an optimal slice set of multiple base station nodes in the radio access network so as to be better adapted to the type, user and service features of the UE and obtain better data transmission effects.

Referring to FIG. 14, this embodiment of the present invention provides a radio access network slice selection method, applied to a UE. The method includes the steps described below.

In S401, the UE reports an RRM measurement result and slice ID information to a master base station in a radio access network.

It is to be understood that the RRM can provide the service quality guarantee for the UE in the network, and the step in which the UE reports the RRM measurement result and the slice ID information to the master base station can trigger the master base station to perform establishment or modification of the multi-connection data transmission operation, so that in the case of uneven distribution of network traffic and change of channel features caused by channel attenuation and interference, available resources in the wireless transmission part and the network can be flexibly allocated and dynamically adjusted, thereby improving the utilization of the wireless spectrum to a greater extent and preventing network congestion and keeping the signaling load as small as possible.

In S402, the UE receives a message indicating multi-connection data transmission configuration sent from the master base station.

After the UE reports the RRM measurement result and the slice ID information to the master base station, the master base station judges the multi-connection data transmission operation and selects the target secondary base station for the UE according to the RRM measurement result, the slice ID information and the local condition of the master base station. After the target secondary base station selects the optimal network slice, the master base station sends the multi-connection data transmission configuration message to the UE, and then the UE can perform multi-connection data transmission with the master serving network slices in the master base station and the secondary serving network slices in the target secondary base station.

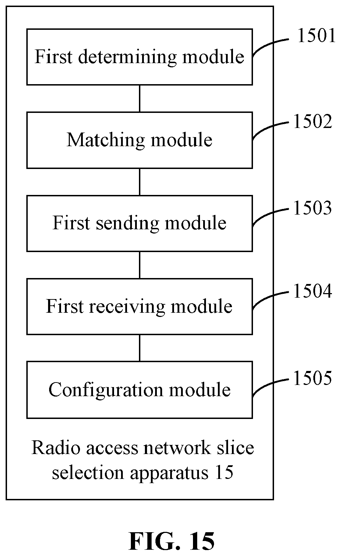

FIG. 15 shows a radio access network slice selection apparatus 15 provided by the present invention. The apparatus 15 is applied to a master base station in a radio access network. The apparatus includes: a first determining module 1501, a matching module 1502, a first sending module 1503, a first receiving module 1504 and a configuration module 1505.

The first determining module 1501 is configured, together with neighboring secondary base stations, to separately construct an end-to-end correspondence of network slices with a core network, and to determine information of radio access network slices (RAN slices) in the master base station and the neighboring secondary base stations according to the end-to-end correspondence of network slices.

The matching module 1502 is configured to establish a priority matching association relationship of the RAN slices in the master base station and the neighboring secondary base stations according to the information of the RAN slices.

The first determining module 1501 is further configured to determine a target secondary base station among the neighboring secondary base stations according to a local condition of the master base station and an RRM measurement result and slice ID information reported by a UE.

The first sending module 1503 is configured to send a secondary base station addition/modification request message and the priority matching association relationship to the target secondary base station.

The first receiving module 1504 is configured to receive a secondary base station addition/modification response message sent by the target secondary base station, where the secondary base station addition/modification response message includes target secondary serving RAN slices selected by the target secondary base station according to the priority matching association relationship.

The configuration module 1505 is configured to perform multi-connection data transmission configuration for the UE by use of a radio resource control (RRC) message.

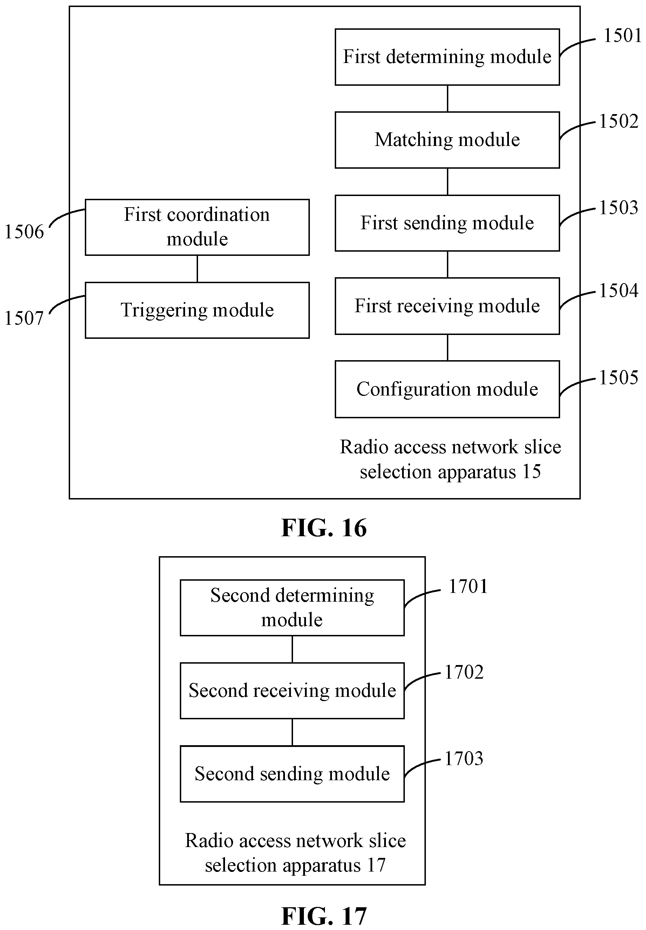

Further, referring to FIG. 16, the apparatus further includes: a first coordination module.

The first coordination module 1505 is configured to perform information coordination between master serving RAN slices in the master base station and secondary serving RAN slices in the neighboring secondary base stations through a common process of an interface between base station nodes, and to exchange slicing information and working status of the RAN slices.

The matching module 1502 is configured to establish a priority matching association relationship between the master serving RAN slices and the secondary serving RAN slices according to a result of the information coordination and a preset rule.

Further, the first determining module 1501 is configured to trigger a multi-connection data transmission establishment/modification decision and to determine the target secondary base station according to the local condition of the master base station and the received RRM measurement result and slice ID information reported by the UE;

The first sending module 1503 is configured to send the secondary base station addition/modification request message to the target secondary base station through an interface between base station nodes according to the multi-connection data transmission establishment/modification decision.

Further, referring to FIG. 16, the apparatus further includes: a triggering module 1507.

The triggering module 1507 is configured to receive the RRM measurement result and the slice ID information reported by the UE to trigger the master base station to perform the multi-connection data transmission establishment/modification decision.

The first determining module 1501 is configured to perform a multi-connection data transmission operation and to determine a neighboring secondary base station satisfying a data offloading condition as the target secondary base station according to the local condition of the master base station and the received RRM measurement result and slice ID information reported by the UE.

For the description of the radio access network slice selection apparatus for multi-connection data transmission applied to the master base station in the radio access network provided by this embodiment of the present invention, reference is made to the description of the radio access network slice selection method for the multi-connection data transmission. The description will not be repeated in this embodiment of the present invention.

In practical use, the first determining module 1501, the matching module 1502, the first sending module 1503, the first receiving module 1504, the configuration module 1505, the first coordination module 1506 and the triggering module 1507 can all be implemented by a central processing unit (CPU), a microprocessor unit (MPU), a digital signal processor (DSP) or a field programmable gate array (FPGA) in the radio access network slice selection apparatus 15 for multi-connection data transmission.

This embodiment of the present invention provide a radio access network slice selection apparatus, in which a master base station sends multi-connection data transmission configuration request information to neighboring secondary base stations according to an RRM measurement result and slice ID information reported by a UE, the neighboring secondary base stations make a selection of secondary serving RAN slices according to a configuration request and a local condition of the master base station, and the master base station performs multi-connection data transmission configuration for the UE according to selection information of the secondary serving RAN slices, so that the UE is in an optimal slice set of multiple base station nodes in the radio access network so as to be better adapted to the type, user and service features of the UE and obtain better data transmission effects.

FIG. 17 shows a radio access network slice selection apparatus 17 for multi-connection data transmission provided by this embodiment of the present invention. The apparatus 17 is applied to neighboring secondary base stations of a master base station in a radio access network. The apparatus includes: a second determining module 1701, a second receiving module 1702 and a second sending module 1703.

The second determining module 1701 is configured, together with the master base station, to separately construct an end-to-end correspondence of network slices with a core network, and to determine information of radio access network slices (RAN slices) in the master base station and the neighboring secondary base stations according to the end-to-end correspondence of network slices;
and to determine a RAN slice priority matching association relationship which is established by the master base station according to the information of the RAN slices;
and to determine a target secondary base station selected by the master base station from the neighboring secondary base stations.

The second receiving module 1702 is configured to receive a secondary base station addition/modification request message and the priority matching association relationship sent from the master base station.

The second determining module 1701 is further configured to determine target secondary serving RAN slices by use of the priority matching association relationship according to a local condition of the target secondary base station and the secondary base station addition/modification request message.

The second sending module 1703 is further configured to send a secondary base station addition/modification response message to the master base station, where the secondary base station addition/modification response message comprises the target secondary serving RAN slices selected by the target secondary base station according to the priority matching association relationship.

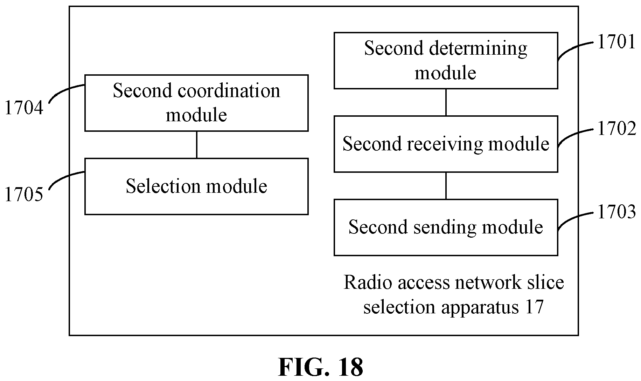

Further, referring to FIG. 18, the apparatus further includes: a second coordination module 1704.

The second coordination module 1704 is configured to perform information coordination between secondary serving RAN slices in the neighboring secondary base stations and master serving RAN slices in the master base station through a common process of an interface between base station nodes, and to exchange slicing information and working status of the RAN slices.

The second determining module 1701 is configured to determine a priority matching association relationship between the secondary serving RAN slices and the master serving RAN slices, which is established by the master base station according to a result of the information coordination and a preset rule.

Further, referring to FIG. 18, the apparatus further includes: a selection module 1705.

The selection module 1705 is configured to receive the secondary base station addition/modification request message sent by the master base station, and, in conjunction with the local condition of the target secondary base station and by use of the priority matching association relationship, to perform selection from highest-priority RAN slices requested by the master base station.

The second determining module 1701 is configured to determine highest-priority RAN slices satisfying the local condition as the target secondary serving RAN slices.

The second sending module 1703 is configured to send the secondary base station addition/modification response message to the master base station through an interface between base station nodes, where the secondary base station addition/modification response message includes the target secondary serving RAN slices.

Further, the selection module 1705 is configured, when the priority matching association relationship includes only slice ID or multi-dimensional attribute description identifier (MDD) information reported by a UE, to select the target secondary serving RAN slices by the target secondary base station according to the slice ID or MDD information.

For the description of the radio access network slice selection apparatus for multi-connection data transmission applied to the neighboring secondary base stations of the master base station in the radio access network provided by this embodiment of the present invention, reference is made to the description of the radio access network slice selection method for the multi-connection data transmission. The description will not be repeated in this embodiment of the present invention.

In practical use, the second determining module 1701, the second receiving module 1702, the second sending module 1703, the second coordination module 1704 and the selection module 1705 can all be implemented by a CPU, an MPU, a DSP or an FPGA in the radio access network slice selection apparatus 17 for multi-connection data transmission.

This embodiment of the present invention provide a radio access network slice selection apparatus, in which a master base station sends multi-connection data transmission configuration request information to neighboring secondary base stations according to an RRM measurement result and slice ID information reported by a UE, the neighboring secondary base stations make a selection of secondary serving RAN slices according to a configuration request and a local condition of the master base station, and the master base station performs multi-connection data transmission configuration for the UE according to selection information of the secondary serving RAN slices, so that the UE is in an optimal slice set of multiple base station nodes in the radio access network so as to be better adapted to the type, user and service features of the UE and obtain better data transmission effects.

An example further provides a computer-readable storage medium configured to store computer-executable instructions for executing the radio access network slice selection method as shown in FIGS. 7 to 10 when the computer-executable instructions are executed by a processor. This example further provides a computer-readable storage medium configured to store computer-executable instructions for executing the radio access network slice selection method as shown in FIGS. 11 to 14 when the computer-executable instructions are executed by a processor.

### INDUSTRIAL APPLICABILITY

Embodiments of the present invention provide radio access network slice selection methods and apparatus, in which a master base station sends multi-connection data transmission configuration request information to neighboring secondary base stations according to an RRM measurement result and slice ID information reported by a UE, the neighboring secondary base stations make a selection of secondary serving RAN slices according to a configuration request and a local condition of the master base station, and the master base station performs multi-connection data transmission configuration for the UE according to selection information of the secondary serving RAN slices, so that the UE is in an optimal slice set of multiple base station nodes in the radio access network so as to be better adapted to the type, user and service features of the UE and obtain better data transmission effects.

## Claims

1. A radio access network slice selection method, applied to a master base station in a radio access network, comprising:
constructing (S201), by the master base station and neighboring secondary base stations in the radio access network separately, an end-to-end correspondence of network slices with a core network, and determining information of radio access network, RAN, slices in the master base station and the neighboring secondary base stations according to the end-to-end correspondence of network slices;
**characterized in that**, establishing (S202), by the master base station, a priority matching association relationship of the RAN slices in the master base station and the neighboring secondary base stations according to the information of the RAN slices;
determining (S203), by the master base station, a target secondary base station from the neighboring secondary base stations according to a local condition of the master base station and a radio resource management, RRM, measurement result and slice identifier, ID, information reported by an user equipment, UE, and sending, by the master base station, a secondary base station addition/modification request message and the priority matching association relationship to the target secondary base station; and
receiving (S204), by the master base station, a secondary base station addition/modification response message sent from the target secondary base station, and performing, by the master base station, multi-connection data transmission configuration for the UE through a radio resource control RRC message, wherein the secondary base station addition/modification response message comprises target secondary serving RAN slices selected by the target secondary base station according to the priority matching association relationship;
wherein the establishing (S202), by the master base station, the priority matching association relationship of the RAN slices in the neighboring secondary base stations and the master base station according to the information of the RAN slices comprises:
performing (S2021) information coordination between master serving RAN slices in the master base station and secondary serving RAN slices in the neighboring secondary base stations through a common process of an interface between base station nodes, and exchanging slicing information and working status of the RAN slices; and
establishing (S2022) a priority matching association relationship between the master serving RAN slices and the secondary serving RAN slices according to a result of the information coordination and a preset rule;
wherein the determining (S203), by the master base station, the target secondary base station from the neighboring secondary base stations according to the local condition of the master base station and the RRM measurement result and slice ID information reported by the UE, and sending, by the master base station, the secondary base station addition/modification request message and the priority matching association relationship to the target secondary base station comprises:
triggering (S2031) a multi-connection data transmission establishment/modification decision and determining the target secondary base station, by the master base station according to the local condition of the master base station and the received RRM measurement result and the slice ID information reported by the UE; and
sending (S2032), by the master base station, the secondary base station addition/modification request message to the target secondary base station through an interface between base station nodes according to the multi-connection data transmission establishment/modification decision.

2. The method of claim 1, wherein the triggering the multi-connection data transmission establishment/modification decision and determining the target secondary base station, by the master base station according to the local condition of the master base station and the received RRM measurement result and the slice ID information reported by the UE comprises:
receiving (S20311), by the master base station, the RRM measurement result and the slice ID information reported by the terminal UE, and triggering the master base station to perform the multi-connection data transmission establishment/modification decision; and
performing (S20312) a multi-connection data transmission operation and determining a neighboring secondary base station satisfying a data offloading condition as the target secondary base station, by the master base station according to the local condition of the master base station and the received RRM measurement result and slice ID information reported by the UE.

3. A radio access network slice selection method, applied to neighboring secondary base stations of a master base station in a radio access network, comprising:
constructing (S301), by the neighboring secondary base stations of the master base station and the master base station in the radio access network separately, an end-to-end correspondence of network slices with a core network, and determining information of radio access network, RAN, slices in the master base station and the neighboring secondary base stations according to the end-to-end correspondence of network slices;
**characterized in that**, determining (S302), by the neighboring secondary base stations, a RAN slice priority matching association relationship, which is established by the master base station according to the information of the RAN slices;
determining (S303) a target secondary base station selected by the master base station from the neighboring secondary base stations, and receiving, by the target secondary base station, a secondary base station addition/modification request message and the priority matching association relationship sent from the master base station; and
determining (S304), by the target secondary base station, target secondary serving RAN slices by use of the priority matching association relationship according to a local condition of the target secondary base station and the secondary base station addition/modification request message, and sending, by the target secondary base station, a secondary base station addition/modification reply message to the master base station, wherein the secondary base station addition/modification response message comprises the target secondary serving RAN slices selected by the target secondary base station according to the priority matching association relationship;
wherein the determining, by the neighboring secondary base stations, the RAN slice priority matching association relationship, which is established by the master base station according to the information of the RAN slices comprises:
performing (S3021) information coordination between secondary serving RAN slices in the neighboring secondary base stations and master serving RAN slices in the master base station through a common process of an interface between base station nodes, and exchanging slicing information and working status of the RAN slices; and
determining (S3022) a priority matching association relationship between the secondary serving RAN slices and the master serving RAN slices, which is established by the master base station according to a result of the information coordination and a preset rule;
wherein the determining, by the target secondary base station, the target secondary serving RAN slices by use of the priority matching association relationship according to the local condition of the target secondary base station and the secondary base station addition/modification request message, and sending, by the target secondary base station, the secondary base station addition/modification response message to the master base station comprises:
receiving (S3041), by the target secondary base station, the secondary base station addition/modification request message sent from the master base station, and performing selection from highest-priority RAN slices requested by the master base station in conjunction with the local condition of the target secondary base station and by use of the priority matching association relationship;
determining (S3042) highest-priority RAN slices satisfying the local condition as the target secondary serving RAN slices; and
sending (S3043), by the target secondary base station, the secondary base station addition/modification response message to the master base station through an interface between base station nodes, wherein the secondary base station addition/modification response message comprises the target secondary serving RAN slices.

4. The method of claim 3, wherein the determining, by the target secondary base station, the target secondary serving RAN slices by use of the priority matching association relationship according to the local condition of the target secondary base station and the secondary base station addition/modification request message comprises:
in condition that the priority matching association relationship merely comprises slice identifier, ID, or multi-dimensional attribute description identifier, MDD, information reported by an user equipment, UE, selecting, by the target secondary base station, the target secondary serving RAN slices according to the slice ID or MDD information.

5. A radio access network slice selection apparatus, applied to a master base station in a radio access network, comprising: a first determining module (1501), a matching module (1502), a first sending module (1503), a first receiving module (1504) and a configuration module (1505);
wherein the first determining module (1501) is configured, together with neighboring secondary base stations, to separately construct an end-to-end correspondence of network slices with a core network, and to determine information of radio access network, RAN, slices in the master base station and the neighboring secondary base stations according to the end-to-end correspondence of network slices;
**characterized in that**, wherein the matching module (1502) is configured to establish a priority matching association relationship of the RAN slices in the master base station and the neighboring secondary base stations according to the information of the RAN slices;
wherein the first determining module (1501) is further configured to determine a target secondary base station from the neighboring secondary base stations according to a local condition of the master base station and a radio resource management, RRM, measurement result and slice identifier, ID, information reported by an user equipment, UE;
wherein the first sending module (1503) is configured to send a secondary base station addition/modification request message and the priority matching association relationship to the target secondary base station;
wherein the first receiving module (1504) is configured to receive a secondary base station addition/modification response message sent by the target secondary base station, wherein the secondary base station addition/modification response message comprises target secondary serving RAN slices selected by the target secondary base station according to the priority matching association relationship; and
wherein the configuration module (1505) is configured to perform multi-connection data transmission configuration for the UE based on a radio resource control, RRC, message;
wherein the apparatus further comprises: a first coordination module (1506), wherein the first coordination module (1506) is configured to perform information coordination between master serving RAN slices in the master base station and secondary serving RAN slices in the neighboring secondary base stations through a common process of an interface between base station nodes, and to exchange slicing information and working status of the RAN slices; and
wherein the matching module (1502) is configured to establish a priority matching association relationship between the master serving RAN slices and the secondary serving RAN slices according to a result of the information coordination and a preset rule;
the first determining module (1501) is configured to trigger a multi-connection data transmission establishment/modification decision and to determine the target secondary base station according to the local condition of the master base station and the received RRM measurement result and the slice ID information reported by the UE; and
wherein the first sending module (1503) is configured to send the secondary base station addition/modification request message to the target secondary base station through an interface between base station nodes according to the multi-connection data transmission establishment/modification decision.

6. The apparatus of claim 5, further comprising: a triggering module (1507), wherein the triggering module (1507) is configured to receive the RRM measurement result and the slice ID information reported by the UE to trigger the master base station to perform the multi-connection data transmission establishment/modification decision; and
wherein the first determining module (1501) is configured to perform a multi-connection data transmission operation and to determine a neighboring secondary base station satisfying a data offloading condition as the target secondary base station according to the local condition of the master base station and the received RRM measurement result and the slice ID information reported by the UE.

7. A radio access network slice selection apparatus, applied to neighboring secondary base stations of a master base station in a radio access network, comprising: a second determining module (1701), a second receiving module (1702) and a second sending module (1703), wherein
wherein the second determining module (1701) is configured, together with the master base station, to separately construct an end-to-end correspondence of network slices with a core network, and to determine information of radio access network, RAN, slices in the master base station and the neighboring secondary base stations according to the end-to-end correspondence of network slices; **characterized in that**,
and to determine a RAN slice priority matching association relationship which is established by the master base station according to the information of the RAN slices;
and to determine a target secondary base station selected by the master base station from the neighboring secondary base stations;
wherein the second receiving module (1702) is configured to receive a secondary base station addition/modification request message and the priority matching association relationship sent from the master base station;
wherein the second determining module (1701) is further configured to determine target secondary serving RAN slices by use of the priority matching association relationship according to a local condition of the target secondary base station and the secondary base station addition/modification request message; and
wherein the second sending module (1703) is further configured to send a secondary base station addition/modification response message to the master base station, wherein the secondary base station addition/modification response message comprises the target secondary serving RAN slices selected by the target secondary base station according to the priority matching association relationship;.
wherein the apparatus further comprises: a second coordination module (1704) and a selection module (1705), wherein
the second coordination module (1704) is configured to perform information coordination between secondary serving RAN slices in the neighboring secondary base stations and master serving RAN slices in the master base station through a common process of an interface between base station nodes, and to exchange slicing information and working status of the RAN slices;
wherein the second determining module (1701) is configured to determine a priority matching association relationship between the secondary serving RAN slices and the master serving RAN slices, which is established by the master base station according to a result of the information coordination and a preset rule;
the selection module (1705) is configured to receive the secondary base station addition/modification request message sent from the master base station, and to perform selection from highest-priority RAN slices requested by the master base station in conjunction with the local condition of the target secondary base station and by use of the priority matching association relationship; and
the second determining module (1701) is configured to determine highest-priority RAN slices satisfying the local condition as the target secondary serving RAN slices; and
wherein the second sending module (1703) is configured to send the secondary base station addition/modification response message to the master base station through an interface between base station nodes, wherein the secondary base station addition/modification response message comprises the target secondary serving RAN slices.

8. The apparatus of claim 7, wherein
the selection module (1705) is configured, in condition that the priority matching association relationship merely comprises slice identifier, ID, or multi-dimensional attribute description identifier, MDD, information reported by an user equipment, UE, to select the target secondary serving RAN slices by the target secondary base station according to the slice ID or MDD information.

## Patentansprüche

1. Verfahren zur Auswahl von Funkzugangsnetzscheiben, welches auf eine Master-Basisstation in einem Funkzugangsnetz angewandt wird, umfassend:
Erstellen (S201) einer End-to-End-Korrespondenz von Netzscheiben mit einem Kernnetz durch die Master-Basisstation und benachbarte sekundäre Basisstationen, und Bestimmen von Informationen von Funkzugangsnetzscheiben (RAN-Scheiben) in der Master-Basisstation und benachbarten sekundären Basisstationen gemäß einer End-to-End-Korrespondenz von Netzscheiben;
**gekennzeichnet durch** ein Einrichten (S202) einer Prioritätsanpassungszuordnungsbeziehung der RAN-Scheiben in der Master-Basisstation und den benachbarten sekundären Basisstationen durch die Master-Basisstation gemäß den Informationen der RAN-Scheiben;
Bestimmen (S203) einer sekundären Zielbasisstation aus der benachbarten sekundären Basisstation durch die Master-Basisstation gemäß einer lokalen Bedingung der Master-Basisstation und eines Messergebnisses einer Funkressourcenverwaltung (RRM) und von Informationen einer Scheibenkennung (ID), welche durch eine Nutzereinrichtung (UE) gemeldet werden, und Senden einer Hinzufügungs-/Modifikationsanfragennachricht einer sekundären Basisstation und der Prioritätsanpassungszuordnungsbeziehung durch die Master-Basisstation an die sekundäre Zielbasisstation; und
Empfangen (S204) einer Hinzufügungs-/Modifikationsanfragenachricht einer sekundären Basisstation, welche von der sekundären Ziel-Basisstation gesendet wurde, durch die Master-Basisstation, und Durchführen einer Mehrfachverbindungsdatenübertragungskonfiguration für die UE durch eine Nachricht einer Funknetzressourcensteuerung (RRC) durch die Master-Basisstation, wobei die Hinzufügungs-/Modifikationsanfragennachricht einer sekundären Basisstation sekundäre bedienende Ziel-RAN-Scheiben umfasst, welche durch die sekundäre Zielbasisstation gemäß der Prioritätsanpassungszuordnungsbeziehung ausgewählt sind;
wobei das Einrichten (S202) der Prioritätsanpassungszuordnungsbeziehung der RAN-Scheiben in den benachbarten sekundären Basisstationen und der Master-Basisstation durch die Master-Basisstation gemäß den Informationen der RAN-Scheiben Folgendes umfasst:
Durchführen (S2021) einer Informationskoordination zwischen bedienenden Master-RAN-Scheiben in der Master-Basisstation und sekundären bedienenden RAN-Scheiben in den benachbarten sekundären Basisstationen durch einen gemeinsamen Prozess einer Schnittstelle zwischen Basisstationsknoten, und Austauschen von Scheibeninformationen und Arbeitsstatus der RAN-Scheiben; und
Einrichten (S2022) einer Prioritätsanpassungszuordnungsbeziehung zwischen den bedienenden Master-RAN-Scheiben und den sekundären bedienenden RAN-Scheiben gemäß eines Ergebnisses der Informationskoordination und einer voreingestellten Regel;
wobei das Bestimmen (S203) der sekundären Zielbasisstation aus den benachbarten sekundären Basisstationen durch die Master-Basisstation gemäß der lokalen Bedingung der Master-Basisstation und des RRM-Messergebnisses und der Scheiben-ID-Informationen, welche durch die UE gemeldet werden, und das Senden der Hinzufügungs-/Modifikationsanfragennachricht einer sekundären Basisstation und der Prioritätsanpassungszuordnungsbeziehung an die sekundäre Zielbasisstation durch die Master-Basisstation Folgendes umfasst:
Veranlassen (S2031) einer Mehrfachverbindungsdatenübertragungseinrichtung/- modifikationsentscheidung und Bestimmen der sekundären Zielbasisstation durch die Masterbasisstation gemäß der lokalen Bedingung der Master-Basisstation und des empfangenen RRM-Messergebnisses und der Scheiben-ID-Informationen, welche durch die UE gemeldet werden; und
Senden (S2032) der Hinzufügungs-/Modifikationsanfragennachricht einer sekundären Basisstation an die sekundäre Zielbasisstation durch eine Schnittstelle zwischen Basisstationsknoten durch die Master-Basisstation gemäß der Mehrfachverbindungsdatenübertragungseinrichtungs/- modifikationsentscheidung.

2. Verfahren nach Anspruch 1, wobei das Veranlassen der Mehrfachverbindungsdatenübertragungseinrichtung/- modifikationsentscheidung und das Bestimmen der sekundären Zielbasisstation durch die Masterbasisstation gemäß der lokalen Bedingung der Master-Basisstation und dem empfangenen RRM-Messergebnisses und der Scheiben-ID-Informationen, welche durch die (UE) gemeldet werden, Folgendes umfasst:
Empfangen (S20311) des RRM-Messergebnisses und der Scheiben-ID-Informationen, welche durch das Endgerät UE gemeldet werden, durch die Master-Basisstation, und Veranlassen der Master-Basisstation, die Entscheidung einer Mehrfachverbindungsdatenübertragungseinrichtung/-modifikation durchzuführen; und
Durchführen (S20312) eines Mehrfachverbindungsdatenübertragungsbetriebs und Bestimmen einer benachbarten sekundären Basisstation, welche eine Datenabladebedingung als die sekundäre Basisstation erfüllt, durch die Master-Basisstation gemäß der lokalen Bedingung der Master-Basis-Station und dem empfangenen RRM-Ergebnis und den Scheiben-ID-Informationen, welche durch die UE gemeldet werden.

3. Verfahren zur Auswahl von Funkzugangsnetzscheiben, angewendet auf benachbarte sekundäre Basisstationen einer Master-Basisstation in einem Funkzugangsnetz, umfassend:
Erstellen (S301) einer End-to-End-Korrespondenz von Netzscheiben mit einem Kernnetz durch die benachbarten sekundären Basisstationen und die Master-Basisstation in dem Funkzugangsnetz, und Bestimmen von Informationen von Funkzugangsnetzscheiben (RAN-Scheiben) in der Master-Basisstation und den benachbarten sekundären Basisstationen gemäß der End-to-End-Korrespondenz von Netzscheiben;
**gekennzeichnet durch** ein Bestimmen (S302) einer Prioritätsanpassungszuordnungsbeziehung von RAN-Scheiben, welche durch die Master-Basisstation gemäß den Informationen der RAN-Scheiben erstellt wird, durch die benachbarten sekundären Basisstationen;
Bestimmen (S303) einer sekundären Zielbasisstation, welche durch die Master-Basisstation aus den benachbarten sekundären Basisstationen ausgewählt ist, und Empfangen einer Hinzufügungs-/Modifikationsanfragenachricht einer sekundären Basisstation und der Prioritätsanpassungszuordnungsbeziehung, welche von der Master-Basisstation gesendet wird, durch die sekundäre Zielbasisstation; und
Bestimmen (S304) von sekundären bedienenden Ziel-RAN-Scheiben durch die sekundäre Ziel-Basisstation unter Verwendung der Prioritätsanpassungszuordnungsbeziehung, gemäß einer lokalen Bedingung der sekundären Ziel-Basisstation und der Hinzufügungs-/Modifikationsanfragenachricht einer sekundären Basisstation, und Senden einer Hinzufügungs-/Modifikationsantwortnachricht einer sekundären Basisstation an die Master-Basisstation durch die sekundäre Ziel-Basisstation, wobei die Hinzufügungs-/Modifikationsantwortnachricht einer sekundären Basisstation die sekundären bedienenden Ziel-RAN-Scheiben umfasst, welche von der sekundären Ziel-Basisstation gemäß der Prioritätsübereinstimmungs-Zuordnungsbeziehung ausgewählt werden;
wobei das Bestimmen der RAN-Scheiben-Prioritätsanpassungszuordnungsbeziehung durch die benachbarten sekundären Basisstationen, welche durch die Master-Basisstation gemäß der Information der RAN-Scheiben eingerichtet wird, Folgendes umfasst
Durchführen (S3021) einer Informationskoordination zwischen bedienenden sekundären Master-RAN-Scheiben in den benachbarten sekundären Basisstation und bedienenden Master-RAN-Scheiben in der Master-Basisstation durch einen gemeinsamen Prozess einer Schnittstelle zwischen Basisstationsknoten, und Austauschen von Scheibeninformationen und Arbeitsstatus der RAN-Scheiben; und
Bestimmen (S3022) einer Prioritätsanpassungszuordnungsbeziehung zwischen den sekundären bedienenden RAN-Scheiben und bedienenden Master-RAN-Scheiben, welche gemäß eines Ergebnisses der Informationskoordination und einer voreingestellten Regel durch die Master-Basisstation erstellt wird;
wobei das Bestimmen der bedienenden sekundären Ziel-RAN-Scheiben gemäß der lokalen Bedingung der sekundären Ziel-Basisstation und der Hinzufügungs-/Modifikationsanfragenachricht einer sekundären Basisstation unter Verwendung der Prioritätsanpassungszuordnungsbeziehung, und das Senden der Hinzufügungs-/Modifikationsanfragenachricht einer sekundären Basisstation an die die Master-Basisstation durch die sekundäre Zielbasisstation Folgendes umfasst:
Empfangen (S3041) der Hinzufügungs-/Modifikationsanfragenachricht einer sekundären Basisstation von der Master-Basisstation durch die sekundäre Zielbasisstation, und Durchführen einer Auswahl von RAN-Scheiben mit höchster Priorität, welche durch die Master-Basisstation angefragt werden zusammen mit der lokalen Bedingung der sekundären Zielbasisstation und durch eine Verwendung der Prioritätsanpassungszuordnungsbeziehung;
Bestimmen (S3042) von RAN-Scheiben einer höchsten Priorität, welche die lokale Bedingung als die sekundäre bedienende Ziel-RAN-Scheiben erfüllt; und
Senden (S3043) der Hinzufügungs-/Modifikationsanfragennachricht einer sekundären Basisstation an die Master-Basisstation durch eine Schnittstelle zwischen Basisstationsknoten durch die sekundäre Zielbasisstation, wobei die Hinzufügungs-/Modifikationsanfragennachricht die sekundären bedienenden Ziel-RAN-Scheiben umfasst.

4. Verfahren nach Anspruch 3, wobei das Bestimmen der sekundären bedienenden Ziel-RAN-Scheiben durch die sekundäre Zielbasisstation unter Verwendung der Prioritätsanpassungszuordnungsbeziehung gemäß der lokalen Bedingung der sekundären Ziel-Basisstation und der Hinzufügungs-/Modifikationsanfragennachricht einer sekundären Basisstation Folgendes umfasst:
Auswählen, der sekundären bedienenden Ziel-RAN-Scheiben durch die sekundäre Zielbasisstation gemäß den Scheiben-ID oder MDD-Informationen, unter der Bedingung, dass die Prioritätsanpassungszuordnungsbeziehung lediglich eine Scheibenkennung (ID) oder eine Information einer mehrdimensionalen Attributbeschreibungskennung (MDD) umfasst, welche durch eine Nutzereinrichtung (UE) gemeldet wird.

5. Gerät zur Auswahl von Funkzugangsnetzscheiben, angewandt auf eine Master-Basisstation in einem Funkzugangsnetz, umfassend:
ein erstes Bestimmungsmodul (1501), ein Anpassungsmodul (1502), ein erstes Sendemodul (1503), ein erstes empfangendes Modul (1504) und ein Konfigurationsmodul (1505);
wobei das erste Bestimmungsmodul (1501) dazu konfiguriert ist, eine End-to-End-Korrespondenz von Netzscheiben mit einem Kernnetz zusammen mit benachbarten sekundären Basisstationen separat zu erstellen, und Informationen von Funkzugangsnetz-Scheiben (RAN-Scheiben) in der Master-Basisstation und den benachbarten sekundären Basisstationen gemäß der End-to-End-Korrespondenz von Netzscheiben zu bestimmen;
**dadurch gekennzeichnet, dass** wobei das Anpassungsmodul (1502) dazu konfiguriert ist, eine Prioritätsanpassungszuordnungsbeziehung der RAN-Scheiben in der Master-Basisstation und den benachbarten sekundären Basisstationen gemäß den Informationen der RAN-Scheiben einzurichten;
wobei das erste Bestimmungsmodul (1501) ferner dazu konfiguriert ist, eine sekundäre Ziel-Basisstation aus den benachbarten sekundären Basisstationen zu bestimmen gemäß einer lokalen Bedingung der Master-Basisstation und einem Messergebnisses einer Funkressourcenverwaltung (RRM) und von Informationen einer Scheibenkennung (ID), welche durch eine Nutzereinrichtung (UE) gemeldet werden;
wobei das erste Sendemodul (1503) dazu konfiguriert ist, eine Hinzufügungs-/Modifikationsanfragennachricht einer sekundären Basisstation und die Prioritätsanpassungszuordnungsbeziehung an die sekundäre Zielbasisstation zu senden;
wobei das erste Empfangsmodul (1504) dazu konfiguriert ist, eine Hinzufügungs-/Modifikationsanfragennachricht einer sekundären Basisstation zu empfangen, welche durch die sekundäre Zielbasisstation gesendet wird, wobei die Hinzufügungs-/Modifikationsanfragennachricht einer sekundären Basisstation sekundäre bedienende Ziel-RAN-Scheiben umfasst, welche durch die sekundäre Zielbasisstation gemäß der Prioritätsanpassungszuordnungsbeziehung ausgewählt sind; und
wobei das Konfigurationsmodul (1505) dazu konfiguriert ist, eine Multiverbindungsdatenübertragungskonfiguration für die UE basierend auf einer Funkressourcensteuerung (RRC) durchzuführen;
wobei das Gerät ferner folgendes umfasst: ein erste Koordinationsmodul (1506), wobei das erste Koordinationsmodul (1506) dazu konfiguriert ist, eine Informationskoordination zwischen bedienenden Master-RAN-Scheiben in der Master-Basisstation und sekundären bedienenden RAN-Scheiben in den benachbarten sekundären Basisstationen durch einen gemeinsamen Prozess einer Schnittstelle zwischen Basisstationsknoten durchzuführen, und Scheibeninformationen und Arbeitsstatus der RAN-Scheiben auszutauschen; und
wobei das Anpassungsmodul (1502) dazu konfiguriert ist, eine Prioritätsanpassungszuordnungsbeziehung zwischen den bedienenden Master-RAN-Scheiben und den sekundären bedienenden RAN-Scheiben gemäß einem Ergebnis der Informationskoordination und einer voreingestellten Regel einzurichten;
wobei das erste Bestimmungsmodul (1501) dazu konfiguriert ist, eine Mehrfachverbindungsdatenübertragungseinrichtung/- modifikationsentscheidung zu veranlassen und die sekundäre Zielbasisstation gemäß der lokalen Bedingung der Master-Basisstation und des empfangenen RRM-Messergebnisses und der Scheiben-ID-Informationen zu bestimmen, welche durch die UE gemeldet werden; und
wobei das erste Sendemodul (1503) dazu konfiguriert ist, eine Hinzufügungs-/Modifikationsanfragennachricht einer sekundären Basisstation an die sekundäre Zielbasisstation durch eine Schnittstelle zwischen Basisstationsknoten zu senden gemäß der Mehrfachverbindungsdatenübertragungseinrichtungs/- modifikationsentscheidung.

6. Gerät nach Anspruch 5, ferner umfassend: ein Veranlassungsmodul (1507), wobei das Veranlassungsmodul (1507) dazu konfiguriert ist, das RRM-Messergebnis und die Scheiben-ID-Informationen, welche durch die UE gemeldet werden, zu empfangen, um die Master-Basisstation dazu zu veranlassen, die Mehrfachverbindungsdatenübertragungseinrichtung/modifikationse ntscheidung durchzuführen; und
wobei das erste Bestimmungsmodul (1501) dazu konfiguriert ist, einen Mehrfachverbindungsdatenübertragungsbetrieb durchzuführen und eine benachbarten sekundären Basisstation zu bestimmen, welche eine Datenabladebedingung als die sekundäre Basisstation erfüllt, gemäß der lokalen Bedingung der Master-Basis-Station und dem empfangenen RRM-Ergebnis und den Scheiben-ID-Informationen, welche durch die UE gemeldet werden.

7. Gerät zur Auswahl von Funkzugangsnetzscheiben, angewandt auf eine sekundäre Basisstation einer Master-Basisstation in einem Funkzugangsnetz, umfassend: ein zweites Bestimmungsmodul (1701), ein zweites Empfangsmodul (1702), ein zweites Empfangsmodul (1702) und ein zweites Sendemodul (1703), wobei wobei das zweite Bestimmungsmodul (1701) dazu konfiguriert ist, eine End-to-End-Korrespondenz von Netzscheiben mit einem Kernnetz zusammen der Master-Basisstationen separat zu erstellen, und Informationen aus Funkzugangsnetz-Scheiben (RAN-Scheiben) in der Master-Basisstation und den benachbarten sekundären Basisstationen gemäß der End-to-End-Korrespondenz von Netzscheiben zu bestimmen, **dadurch gekennzeichnet, dass** und eine Prioritätsanpassungszuordnungsbeziehung von RAN-Scheiben zu bestimmen, welche durch die Master-Basisstation gemäß den Informationen der RAN-Scheiben eingerichtet ist;
und eine sekundäre Zielbasisstation zu bestimmen, welche durch die Master-Basisstation aus den benachbarten sekundären Basisstationen ausgewählt ist;
wobei das zweite Empfangsmodul (1702) dazu konfiguriert ist, eine Hinzufügungs-/Modifikationsanfragennachricht einer sekundären Basisstation und die Prioritätsanpassungszuordnungsbeziehung zu empfangen, welche von der Master-Basisstation gesendet wird;
wobei das zweite Bestimmungsmodul (1701) ferner dazu konfiguriert ist, sekundäre bedienende Ziel-RAN-Scheiben unter Verwendung der Prioritätsanpassungszuordnungsbeziehung zu bestimmen, gemäß einer lokalen Bedingung der sekundären Ziel-Basisstation und der Hinzufügungs-/Modifikationsanfragenachricht einer sekundären Basisstation; und
wobei das zweite Sendemodul (1703) dazu konfiguriert ist, eine Hinzufügungs-/Modifikationsanfragennachricht einer sekundären Basisstation an die Master-Basisstation zu senden, wobei die Hinzufügungs-/Modifikationsanfragennachricht einer sekundären Basisstation bedienende Ziel-RAN-Scheiben umfasst, welche durch die sekundäre Zielbasisstation gemäß der Prioritätsanpassungszuordnungsbeziehung ausgewählt sind;
wobei das Gerät ferner Folgendes umfasst: ein zweites Koordinationsmodul (1704) und ein Auswahlmodul (1705), wobei das zweite Koordinationsmodul (1704), dazu konfiguriert ist, eine Informationskoordination zwischen sekundären bedienenden Master-RAN-Scheiben in den benachbarten sekundären Basisstationen und Master-RAN-Scheiben in der Masterbasisstation durch einen gemeinsamen Prozess einer Schnittstelle zwischen Basisstationsknoten durchzuführen, und Scheibeninformationen und Arbeitsstatus der RAN-Scheiben auszutauschen;
wobei das zweite Bestimmungsmodul (1701) dazu konfiguriert ist, eine Prioritätsanpassungszuordnungsbeziehung zwischen den bedienenden sekundären RAN-Scheiben und bedienenden Master-RAN-Scheiben zu bestimmen, welche durch die Master-Basisstation gemäß einem Ergebnisses der Informationskoordination und einer voreingestellten Regel eingerichtet ist;
wobei das Auswahlmodul (1705) dazu konfiguriert ist, die Hinzufügungs-/Modifikationsanfragenachricht einer sekundären Basisstation zu empfangen, welche von der Master-Basisstation gesendet wurde, und eine Auswahl von RAN-Scheiben mit höchster Priorität, welche durch die Master-Basisstation angefragt werden in Verbindung mit der lokalen Bedingung der sekundären Zielbasisstation und unter Verwendung der Prioritätsanpassungszuordnungsbeziehung durchzuführen; und wobei das zweite Bestimmungsmodul (1701) dazu konfiguriert ist, RAN-Scheiben einer höchsten Priorität zu bestimmen, welche die lokale Bedingung als die sekundäre bedienende Ziel-RAN-Scheiben erfüllt; und
wobei das zweite Sendemodul (1703) dazu konfiguriert ist, die Hinzufügungs-/Modifikationsanfragennachricht einer sekundären Basisstation an die Master-Basisstation durch eine Schnittstelle zwischen Basisstationsknoten zu senden, wobei Hinzufügungs-/Modifikationsanfragennachricht die sekundären bedienenden Ziel-RAN-Scheiben umfasst.

8. Gerät nach Anspruch 7, wobei
das Auswahlmodul (1705) dazu konfiguriert ist, die sekundären bedienenden Ziel-RAN-Scheiben durch die sekundäre Zielbasisstation gemäß der Scheiben-ID oder den MDD-Informationen auszuwählen, unter der Bedingung, dass die Prioritätsanpassungszuordnungsbeziehung lediglich eine Scheibenkennung (ID) oder eine Information einer mehrdimensionalen Attributbeschreibungskennung (MDD) umfasst, welche durch eine Nutzereinrichtung (UE) gemeldet wird.

## Revendications

1. Procédé de sélection de tranches de réseau d'accès radio, appliqué à une station de base maître dans un réseau d'accès radio, comprenant :
la construction (S201), par la station de base maître et des stations de base secondaires voisines dans le réseau d'accès radio séparément, d'une correspondance de bout en bout de tranches de réseau avec un réseau central, et la détermination d'informations de tranches de réseau d'accès radio, RAN, dans la station de base maître et les stations de base secondaires voisines conformément à la correspondance de bout en bout de tranches de réseau ;
**caractérisé par**, l'établissement (S202), par la station de base maître, d'une relation d'association de correspondance de priorité des tranches de RAN dans la station de base maître et les stations de base secondaires voisines conformément aux informations des tranches de RAN ;
la détermination (S203), par la station de base maître, d'une station de base secondaire cible parmi les stations de base secondaires voisines conformément à une condition locale de la station de base maître, à un résultat de mesure de gestion de ressources radio, RRM, et à des informations d'identifiant, ID, de tranche signalés par un équipement utilisateur, UE, et l'envoi, par la station de base maître, d'un message de demande d'ajout/modification de station de base secondaire et de la relation d'association de correspondance de priorité à la station de base secondaire cible ; et
la réception (S204), par la station de base maître, d'un message de réponse d'ajout/modification de station de base secondaire envoyé à partir de la station de base secondaire cible, et la réalisation, par la station de base maître, d'une configuration de transmission de données à connexions multiples pour l'UE par l'intermédiaire d'un message de commande de ressources radio, RRC, dans lequel le message de réponse d'ajout/modification de station de base secondaire comprend des tranches de RAN de desserte secondaires cibles sélectionnées par la station de base secondaire cible conformément à la relation d'association de correspondance de priorité ;
dans lequel l'établissement (S202), par la station de base maître, de la relation d'association de correspondance de priorité des tranches de RAN dans les stations de base secondaires voisines et la station de base maître conformément aux informations des tranches RAN comprend :
la réalisation (S2021) d'une coordination d'informations entre des tranches de RAN de desserte maîtres dans la station de base maître et des tranches de RAN de desserte secondaires dans les stations de base secondaires voisines par l'intermédiaire d'un processus commun d'une interface entre des nœuds de station de base, et l'échange d'informations de tranchage et d'un état de fonctionnement des tranches de RAN ; et
l'établissement (S2022) d'une relation d'association de correspondance de priorité entre les tranches de RAN de desserte maîtres et les tranches de RAN de desserte secondaires conformément à un résultat de la coordination d'informations et à une règle prédéfinie ;
dans lequel la détermination (S203), par la station de base maître, d'une station de base secondaire cible parmi les stations de base secondaires voisines conformément à la condition locale de la station de base maître, au résultat de mesure de RRM et à des informations ID de tranche signalés par l'UE, et l'envoi, par la station de base maître, d'un message de demande d'ajout/modification de station de base secondaire et de la relation d'association de correspondance de priorité à la station de base secondaire cible comprennent :
le déclenchement (S2031) d'une décision d'établissement/modification de transmission de données à connexions multiples et la détermination de la station de base secondaire cible, par la station de base maître conformément à la condition locale de la station de base maître, au résultat de mesure de RRM reçu et aux informations ID de tranche signalés par l'UE ; et
l'envoi (S2032), par la station de base maître, du message de demande d'ajout/modification de station de base secondaire à la station de base secondaire cible par l'intermédiaire d'une interface entre des nœuds de station de base conformément à la décision d'établissement/modification de transmission de données à connexions multiples.

2. Procédé selon la revendication 1, dans lequel le déclenchement de la décision d'établissement/modification de transmission de données à connexions multiples et la détermination de la station de base secondaire cible, par la station de base maître conformément à la condition locale de la station de base maître, au résultat de mesure de RRM reçu et aux informations ID de tranche signalés par l'UE comprennent :
la réception (S20311), par la station de base maître, du résultat de mesure de RRM et des informations ID de tranche signalés par l'UE terminal, et le déclenchement de la station de base maître pour réaliser la décision d'établissement/modification de transmission de données à connexions multiples ; et
la réalisation (S20312) d'une opération de transmission de données à connexions multiples et la détermination d'une station de base secondaire voisine satisfaisant une condition de déchargement de données comme station de base secondaire cible, par la station de base maître conformément à la condition locale de la station de base maître, au résultat de mesure de RRM reçu et aux informations ID de tranche signalés par l'UE.

3. Procédé de sélection de tranches de réseau d'accès radio, appliqué aux stations de base secondaires voisines d'une station de base maître dans un réseau d'accès radio, comprenant :
la construction (S301), par les stations de base secondaires voisines de la station de base maître et de la station de base maître dans le réseau d'accès radio séparément, d'une correspondance de bout en bout de tranches de réseau avec un réseau central, et la détermination d'informations de tranches de réseau d'accès radio, RAN, dans la station de base maître et les stations de base secondaires voisines conformément à la correspondance de bout en bout de tranches de réseau ;
**caractérisé par**, la détermination (S302), par les stations de base secondaires voisines, d'une relation d'association de correspondance de priorité de tranches de RAN, qui est établie par la station de base maître conformément aux informations des tranches de RAN ;
la détermination (S303) d'une station de base secondaire cible sélectionnée par la station de base maître parmi les stations de base secondaires voisines, et la réception, par la station de base secondaire cible, d'un message de demande d'ajout/modification de station de base secondaire et de la relation d'association de correspondance de priorité envoyés à partir de la station de base maître ; et
la détermination (S304), par la station de base secondaire cible, de tranches de RAN de desserte secondaires cibles en utilisant la relation d'association de correspondance de priorité conformément à une condition locale de la station de base secondaire cible et au message de demande d'ajout/modification de station de base secondaire, et l'envoi, par la station de base secondaire cible, d'un message de réponse d'ajout/modification de station de base secondaire à la station de base maître, dans lequel le message de réponse d'ajout/modification de station de base secondaire comprend les tranches de RAN de desserte secondaires cibles sélectionnées par la station de base secondaire cible conformément à la relation d'association de correspondance de priorité ;
dans lequel la détermination, par les stations de base secondaires voisines, de la relation d'association de correspondance de priorité de tranches de RAN, qui est établie par la station de base maître conformément aux informations des tranches de RAN comprend :
la réalisation (S3021) d'une coordination d'informations entre des tranches de RAN de desserte secondaires dans les stations de base secondaires voisines et des tranches de RAN de desserte maîtres dans la station de base maître par l'intermédiaire d'un processus commun d'une interface entre des nœuds de station de base, et l'échange d'informations de tranchage et d'un état de fonctionnement des tranches de RAN ; et
la détermination (S3022) d'une relation d'association de correspondance de priorité entre les tranches de RAN de desserte secondaires et les tranches de RAN de desserte maîtres, qui est établie par la station de base maître conformément à un résultat de la coordination d'informations et à une règle prédéfinie ;
dans lequel la détermination, par la station de base secondaire cible, des tranches de RAN de desserte secondaires cibles en utilisant la relation d'association de correspondance de priorité conformément à la condition locale de la station de base secondaire cible et au message de demande d'ajout/modification de station de base secondaire, et l'envoi, par la station de base secondaire cible, du message de réponse d'ajout/modification de station de base secondaire à la station de base maître comprennent :
la réception (S3041), par la station de base secondaire cible, du message de demande d'ajout/modification de station de base secondaire envoyé à partir de la station de base maître, et la réalisation d'une sélection à partir des tranches de RAN de priorité maximale demandées par la station de base maître en association avec la condition locale de la station de base secondaire cible et en utilisant la relation d'association de correspondance de priorité ;
la détermination (S3042) de tranches de RAN de priorité maximale satisfaisant la condition locale comme tranches de RAN de desserte secondaires cibles ; et
l'envoi (S3043), par la station de base secondaire cible, du message de réponse d'ajout/modification de station de base secondaire à la station de base maître par l'intermédiaire d'une interface entre des nœuds de station de base, dans lequel le message de réponse d'ajout/modification de station de base secondaire comprend les tranches de RAN de desserte secondaires cibles.

4. Procédé selon la revendication 3, dans lequel la détermination, par la station de base secondaire cible, des tranches de RAN de desserte secondaires cibles en utilisant la relation d'association de correspondance de priorité conformément à la condition locale de la station de base secondaire cible et au message de demande d'ajout/modification de station de base secondaire comprend :
à condition que la relation d'association de correspondance de priorité ne comprenne que des informations d'identifiant, ID, de tranche ou d'identifiant de description d'attribut multidimensionnel, MDD, signalées par un équipement utilisateur, UE, la sélection, par la station de base secondaire cible, des tranches de RAN de desserte secondaires cibles conformément aux informations d'ID de tranche ou de MDD.

5. Appareil de sélection de tranches de réseau d'accès radio, appliqué à une station de base maître dans un réseau d'accès radio, comprenant : un premier module de détermination (1501), un module de mise en correspondance (1502), un premier module d'envoi (1503), un premier module de réception (1504) et un module de configuration (1505) ;
dans lequel le premier module de détermination (1501) est configuré, avec des stations de base secondaires voisines, pour construire séparément une correspondance de bout en bout de tranches de réseau avec un réseau central, et pour déterminer des informations de tranches de réseau d'accès radio, RAN, dans la station de base maître et les stations de base secondaires voisines conformément à la correspondance de bout en bout de tranches de réseau ;
**caractérisé en ce que**, dans lequel le module de mise en correspondance (1502) est configuré pour établir une relation d'association de correspondance de priorité des tranches de RAN dans la station de base maître et les stations de base secondaires voisines conformément aux informations des tranches de RAN ;
dans lequel le premier module de détermination (1501) est en outre configuré pour déterminer une station de base secondaire cible parmi les stations de base secondaires voisines conformément à une condition locale de la station de base maître, à un résultat de mesure de gestion de ressources radio, RRM, et à des informations d'identifiant, ID, de tranche signalés par un équipement utilisateur, UE ;
dans lequel le premier module d'envoi (1503) est configuré pour envoyer un message de demande d'ajout/modification de station de base secondaire et la relation d'association de correspondance de priorité à la station de base secondaire cible ;
dans lequel le premier module de réception (1504) est configuré pour recevoir un message de réponse d'ajout/modification de station de base secondaire envoyé par la station de base secondaire cible, dans lequel le message de réponse d'ajout/modification de station de base secondaire comprend des tranches de RAN de desserte secondaires cibles sélectionnées par la station de base secondaire cible conformément à la relation d'association de correspondance de priorité ; et
dans lequel le module de configuration (1505) est configuré pour réaliser une configuration de transmission de données à connexions multiples pour l'UE sur la base d'un message de commande de ressources radio, RRC ;
l'appareil comprenant en outre : un premier module de coordination (1506), dans lequel le premier module de coordination (1506) est configuré pour réaliser une coordination d'informations entre des tranches de RAN de desserte maîtres dans la station de base maître et des tranches de RAN de desserte secondaires dans les stations de base secondaires voisines par l'intermédiaire d'un processus commun d'une interface entre des nœuds de station de base, et pour échanger des informations de tranchage et un état de fonctionnement des tranches de RAN ; et dans lequel le module de mise en correspondance (1502) est configuré pour établir une relation d'association de correspondance de priorité entre les tranches de RAN de desserte maîtres et les tranches de RAN de desserte secondaires conformément à un résultat de la coordination d'informations et à une règle prédéfinie ;
le premier module de détermination (1501) est configuré pour déclencher une décision d'établissement/modification de transmission de données à connexions multiples et pour déterminer la station de base secondaire cible conformément à la condition locale de la station de base maître, au résultat de mesure de RRM reçu et aux informations ID de tranche signalés par l'UE ; et
dans lequel le premier module d'envoi (1503) est configuré pour envoyer le message de demande d'ajout/modification de station de base secondaire à la station de base secondaire cible par l'intermédiaire d'une interface entre des nœuds de station de base conformément à la décision d'établissement/modification de transmission de données à connexions multiples.

6. Appareil selon la revendication 5, comprenant en outre : un module de déclenchement (1507), dans lequel le module de déclenchement (1507) est configuré pour recevoir le résultat de mesure de RRM et les informations ID de tranche signalés par l'UE pour déclencher la station de base maître afin de réaliser la décision d'établissement/modification de transmission de données à connexions multiples ; et
dans lequel le premier module de détermination (1501) est configuré pour réaliser une opération de transmission de données à connexions multiples et pour déterminer une station de base secondaire voisine satisfaisant une condition de déchargement de données comme station de base secondaire cible conformément à la condition locale de la station de base maître, au résultat de mesure de RRM reçu et aux informations ID de tranche signalés par l'UE.

7. Appareil de sélection de tranches de réseau d'accès radio, appliqué à des stations de base secondaires voisines d'une station de base maître dans un réseau d'accès radio, comprenant : un second module de détermination (1701), un second module de réception (1702) et un second module d'envoi (1703), dans lequel
dans lequel le second module de détermination (1701) est configuré, avec la station de base maître, pour construire séparément une correspondance de bout en bout de tranches de réseau avec un réseau central, et pour déterminer des informations de tranches de réseau d'accès radio, RAN, dans la station de base maître et les stations de base secondaires voisines conformément à la correspondance de bout en bout de tranches de réseau ; **caractérisé en ce que**,
et pour déterminer une relation d'association de correspondance de priorité de tranches de RAN qui est établie par la station de base maître conformément aux informations des tranches de RAN ;
et pour déterminer une station de base secondaire cible sélectionnée par la station de base maître parmi les stations de base secondaires voisines ;
dans lequel le second module de réception (1702) est configuré pour recevoir un message de demande d'ajout/modification de station de base secondaire et la relation d'association de correspondance de priorité envoyés à partir de la station de base maître ;
dans lequel le second module de détermination (1701) est en outre configuré pour déterminer des tranches de RAN de desserte secondaires cibles en utilisant la relation d'association de correspondance de priorité conformément à une condition locale de la station de base secondaire cible et au message de demande d'ajout/modification de station de base secondaire ; et
dans lequel le second module d'envoi (1703) est en outre configuré pour envoyer un message de réponse d'ajout/modification de station de base secondaire à la station de base maître, dans lequel le message de réponse d'ajout/modification de station de base secondaire comprend les tranches de RAN de desserte secondaires cibles sélectionnées par la station de base secondaire cible conformément à la relation d'association de correspondance de priorité ;
dans lequel l'appareil comprend en outre : un second module de coordination (1704), et un module de sélection (1705), dans lequel
le second module de coordination (1704) est configuré pour réaliser une coordination d'informations entre des tranches de RAN de desserte secondaires dans les stations de base secondaires voisines et des tranches de RAN de desserte maîtres dans la station de base maître par l'intermédiaire d'un processus commun d'une interface entre des nœuds de station de base, et pour échanger des informations de tranchage et un état de fonctionnement des tranches de RAN ;
dans lequel le second module de détermination (1701) est configuré pour déterminer une relation d'association de correspondance de priorité entre les tranches de RAN de desserte secondaires et les tranches de RAN de desserte maîtres, qui est établie par la station de base maître conformément à un résultat de la coordination d'informations et à une règle prédéfinie ; le module de sélection (1705) est configuré pour recevoir le message de demande d'ajout/modification de station de base secondaire envoyé à partir de la station de base maître, et pour réaliser une sélection à partir des tranches de RAN de priorité maximale demandées par la station de base maître en association avec la condition locale de la station de base secondaire cible et en utilisant la relation d'association de correspondance de priorité ; et
le second module de détermination (1701) est configuré pour déterminer des tranches de RAN de priorité maximale satisfaisant la condition locale comme tranches de RAN de desserte secondaires cibles ; et
dans lequel le second module d'envoi (1703) est configuré pour envoyer le message de réponse d'ajout/modification de station de base secondaire à la station de base maître par l'intermédiaire d'une interface entre des nœuds de station de base, dans lequel le message de réponse d'ajout/modification de station de base secondaire comprend les tranches de RAN de desserte secondaires cibles.

8. Appareil selon la revendication 7, dans lequel
le module de sélection (1705) est configuré, à condition que la relation d'association de correspondance de priorité ne comprenne que des informations d'identifiant, ID, de tranche ou d'identifiant de description d'attribut multidimensionnel, MDD, signalées par un équipement utilisateur, UE, pour sélectionner les tranches de RAN de desserte secondaires cibles par la station de base secondaire cible conformément aux informations d'ID de tranche ou de MDD.
